# EUROPEAN PATENT SPECIFICATION

(11) **EP 1 927 477 B1**
(45) Date of publication and mention of the grant of the patent: **18.03.2009**
(21) Application number: 07023039.6
(22) Date of filing: 28.11.2007
(51) Int. Cl.: B41J 2/435, B41M 7/00, C09D 11/00, C09D 11/10

(54) **Ink composition for inkjet-recording and method for inkjet-recording**
Tintenzusammensetzung zur Tintenstrahlaufzeichnung und Verfahren zur Tintenstrahlaufzeichnung
Composition d'encre pour une impression à jet d'encre et procédé d'impression à jet d'encre

(30) Priority: 30.11.2006 JP 2006323610; 26.02.2007 JP 2007046209
(43) Date of publication of application: 04.06.2008
(73) Proprietor: FUJIFILM Corporation, Minato-ku Tokyo (JP)
(72) Inventor: Nakamura, Ippei, Ashigarakami-gun Kanagawa (JP); Tojo, Kaoru, Ashigarakami-gun Kanagawa (JP); Hayata, Yuuichi, Kent CT10 2LE (GB)
(74) Representative: HOFFMANN EITLE

(56) References cited:
- EP-A- 1 876 209
- EP-A- 1 882 724
- US-A- 5 239 028
- DATABASE CA [Online] CHEMICAL ABSTRACTS SERVICE, COLUMBUS, OHIO, US; TAGUCHI, TOSHIKI ET AL: "Light-resistant jet-printing inks, their ink sets, and method for jet printing" XP002468711 retrieved from STN Database accession no. 2005:368194 & JP 2005 112895 A (FUJI PHOTO FILM CO., LTD., JAPAN) 28 April 2005 (2005-04-28)
- DATABASE WPI Week 199127 Derwent Publications Ltd., London, GB; AN 1991-197262 XP002468712 & JP 03 122172 A (NIPPON KAYAKU KK) 24 May 1991 (1991-05-24)

## Description

### BACKGROUND OF THE INVENTION

### Field of the Invention

The present invention relates to an ink composition for use in inkjet-recording and a method for inkjet-recording using the ink for inkjet-recording. More particularly, the invention relates to an inkjet-recording ink composition, which is curable at high sensitivity by irradiation with actinic radiation, also possessing sufficient flexibility in the image portion formed after the curing of the ink, and an inkjet-recording method using the same.

### Description of the related Art

Methods such as the electrophotography technique, the sublimination-type and melt-type thermal ink-transfer techniques and the inkjet-recording technique exist as recording methods for forming images on a recording medium such as paper on the basis of image data signals. The electrophotogaphy technique requires the use of a process for forming an electrostatic latent image on a photosensitive drum through charging and light-exposure and, therefore, the system becomes complex, resulting in problems such as increased production costs. In addition, although the equipment used in the thermal ink-transfer technique is inexpensive, problems such as high running costs and waste material arise because this technique uses an ink ribbon.
However, the equipment used in the inkjet-recording technique is inexpensive and because this is a technique in which images are formed directly on a recording medium by ejecting an ink on only the necessary image portion, ink is used efficiently and running costs are low. Furthermore, this technique produces little noise and is, therefore, excellent as an image-recording technique.

An ink composition which is curable at high-sensitivity and is able to form a high quality image is sought after as an ink composition which is curable by irradiation with actinic radiation such as ultraviolet rays (a radiation curable ink composition), and able to be used as an ink composition for inkjet recording.

Since high curability by irradiation with actinic radiation is obtained by attaining a radiation curable ink composition with improved sensitivity, there are a wide variety of advantages such as reduction of electricity consumption and increased lifetime of the actinic radiation generator due to a decreased workload, as well as the prevention of the volatization of uncured low-molecular susbstances and the suppression of a reduction in the strength of the images formed. Also, improved cured film strength due to the high sensitivity of the radiation-curing type ink composition yields high strength and durability on the image portion formed by the ink composition.

As an example of an ultraviolet-curable ink, an ink composition usuable in combination with monomers each having a mutually different functional group of monofunctional monomers or polyfunctional monomers has been proposed (see, for example, Japanese Patent Application Laid-Open (JP-A) No. 5-214280). Further, a composition containing a polyfunctional acrylate has been proposed as a radiation-curable ink composition (see, for example, JP-A No. 8-41133). Although these ink compositions have superior curing speed and are able to form images without any bleeding, they possessed the problem that the adhesiveness (adhesion property) to the recording medium was deteriorated due to the volume of the composition shrinking at the time of curing.

In order to form a high precision image by an inkjet-recording technique, a technique where a specific structural amine compound is added to an ink composition has been disclosed (see, for example, JP-A No. 2004-238456). Amine compounds are used in a proportion of 0.1% to several percent in various ink compositions so as to improve resistance to climatic conditions (see, for example, JP-A No. 3-122172). However, since certain kinds of amine compounds have the property of trapping radicals generated from polymerization initiators, there are concerns that this will deteriorate curing sensitivity or that surface stickiness will occur in the formed film.

An ink composition for inkjet-recording using a cyclic alkanol acrylate as a monofunctional monomer has been disclosed, but since a large amount of polyfunctional monomers (bifunctional or trifunctional) are used in combination to compensate for decreased sensitivity (see, for example, Japanese National Phase Publication No. 2001-525479), there was a problem of poor flexibility in the cured film.

As described above, an ink composition with excellent adhesiveness to a recording medium as well as excellent flexibility in the formed image portion while maintaining superior curing sensitivity and image strength has been sought after; however, at present, such a composition is not yet available.

### SUMMARY OF THE INVENTION

The present invention has been made in view of the above circumstances and provides an ink composition for inkjet-recording and a method for the inkjet-recording. A first aspect of the present invention provides an ink composition for inkjet-recording, comprising (A) a compound having a polymerizable unsaturated bond and a cyclic amine structure in the molecule, (B) a compound having a polymerizable unsaturated bond and an alicyclic structure in the molecule, and (C) a radical polymerization initiator.

A second aspect of the present invention provides a method for inkjet-recording, comprising:
(i-1) ejecting the ink composition for inkjet-recording of the same onto a recording medium, and
(i-2) curing the ejected ink composition for inkjet recording by irradiation with actinic radiation.

### DETAILED DESCRIPTION OF THE INVENTION

As a result of extensive studies by the present inventors, they have found that such problems described above can be solved by use of a specific amine structural compound and a specific alicyclic structural compound for an ink composition, and have completed an ink composition for inkjet-recording of the invention and a method for inkjet-recording of the invention.

Namely, the ink composition for inkjet-recording of the invention is an inkjet-recording ink composition characterized in that it comprises (A) a compound having a polymerizable unsaturated bond and a cyclic amine structure in the molecule, (B) a compound having a polymerizable unsaturated bond and an alicyclic structure in the molecule, and (C) a radical polymerization initiator.

One exemplary embodiment of an ink composition for inkjet-recording of the invention further comprises (D) a colorant.

Further, the inkjet-recording method of the invention is characterized by comprising:
(i-1) ejecting an ink composition of the invention on a recording medium, and
(i-2) irradiating the ejected ink composition with actinic radiation and curing the composition.

### [Ink Composition for Inkjet-Recording]

The ink composition for inkjet-recording of the invention is characterized in that it comprises (A) a compound having a polymerizable unsaturated bond and a cyclic amine structure in the molecule, (B) a compound having a polymerizable unsaturated bond and an alicyclic structure in the molecule, and (C) a radical polymerization initiator.

Hereinafter, essential components of the ink composition for inkjet-recording of the invention will be explained.

### < (A) Compound having a polymerizable unsaturated bond and a cyclic amine structure in the molecule>

The ink composition for inkjet-recording of the invention is characterized in that it comprises (A) a compound having a polymerizable unsaturated bond and a cyclic amine structure in the molecule (hereinafter, appropriately referred to as "specific cyclic amine compound").

Characteristic components in the invention, i.e. "a compound having a polymerizable unsaturated bond and a cyclic amine structure in the molecule (specific cyclic amine compound)", will be explained in detail.
As the (A) specific cyclic amine compound usable in the invention, it is possible to use, without any limitation, any compounds having at least one polymerizable unsaturated bond and at least one cyclic amine structure in the molecule.

Examples of the polymerizable unsaturated bond in the component (A) include a double bond and a triple bond, and among them, a radical polymerizable double bond is preferred. In order to obtain a low viscosity composition suitable for the inkjet-recording ink composition, as well as in view of being able to obtain a flexible cured film in the image formation, the number of the polymerizable unsaturated bonds in a specific cyclic amine compound is preferably 1 to 3, more preferably 1 to 2, and especially preferably 1.

A preferable functional group containing a polymerizable unsaturated bond includes, for example, a (metha)acryloyl group, an allyl group, a styryl group, a vinyloxy group, and the like, and in view of curing sensitivity of an ink composition, a (metha)acryloyl group is preferred, and an acryloyl group is especially preferred. In the above, the (metha)acryloyl group includes either or both of acryloyl or methacryloyl groups.

As an example of cyclic amine structures, any cyclic amine can be used so long as at least one of the atoms forming the ring structure is a nitrogen atom.
The number of the rings in the ring structure is preferably 3 to 7, more preferably 4 to 7, and especially preferably 5 to 6.

The bond which forms the ring structure may be either a single bond or a double bond, preferably a single bond. In the case of a single bond, i.e. a cyclic amine structure formed is an alicyclic structure, improved effect on curing speed, especially suppressive effect on polymerization inhibition due to oxygen at the time of curing in the air, becomes remarkable, and thus, an ink composition composed mainly of a monofunctional monomer also has an advantage in its high curability.

The number of the nitrogen atom(s) contained in the ring structure is preferably 1 to 3, and more preferably 1 to 2, and a structure having only one basic nitrogen atom in the ring structure is especially preferred.

A ring which forms a cyclic amine structure may have a substituent if introducible, and preferable examples thereof include an alkyl group having a relatively short chain of 1 to 4 carbon atoms, preferably such as a methyl group and an ethyl group, and especially preferably such as a methyl group.
Further, as a constituent component for forming a ring in the cyclic amine structure, hetero atom(s) such as oxygen atom and sulfur atom other than the nitrogen atom may be contained therein.

Among the cyclic amine structures, an especially preferred example thereof includes a pyrrolidine ring, a piperidine ring and a morpholine ring, and a piperidine ring having a substituent, represented by Formula (1) below, is particularly preferable.

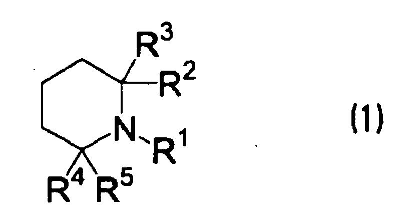

In the formula (1), R¹ is an alkyl group or a substituted alkyl group.
R¹ is an alkyl group having one or more carbon atoms, preferably an alkyl group having 1 to 20 carbon atoms, more preferably an alkyl group having 1 to 12 carbon atoms, and especially preferably an alkyl group having 1 to 4 carbon atoms. Specific examples of preferred alkyl group include methyl, ethyl, n-butyl, n-hexyl, and n-nonyl groups, among which methyl, ethyl, and butyl groups are more preferable, and methyl group is especially preferable. Further, it is preferable to bear hydrogen atom(s) on the carbon atom adjacent to the nitrogen atom, and the number of the hydrogen atoms is preferably 2 or more.

When R¹ is a substituted alkyl group, examples of such introducible substituents include preferably an alkyl group, an alkoxy group, an aryl group, an aryloxy group, an acyl group, an amino group, a hydroxy group, a cyano group, a nitro group, a halogen atom, and the like.

Each of R² to R⁵ independently represents a methyl group or an ethyl group, and a methyl group is preferred, and among them, the case where R² to R⁵ are all methyl groups is more preferable.

In the (A) a specific cyclic amine compound of the invention, the cyclic amine structure is linked to a polymerizable-unsaturated bond via a connecting group, and the connecting position may be any position which is linked to the polymerizable unsaturated bond, except for the positions at which R² to R⁵ are present in the cyclic amine structure represented by Formula (I).

Examples of (A) a specific cyclic amine compound of the invention include preferably compounds represented by Formulae (2), (3) and (4), namely those wherein a polymerizable double bond links to the cyclic amine structure via a required connecting group.

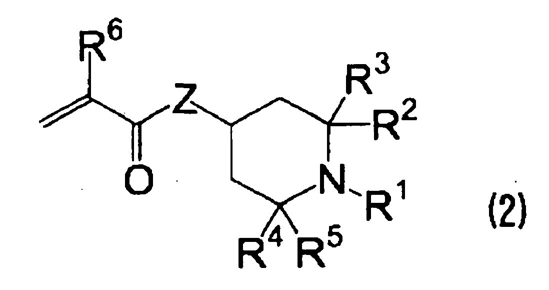

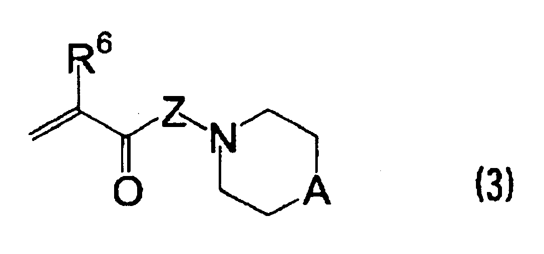

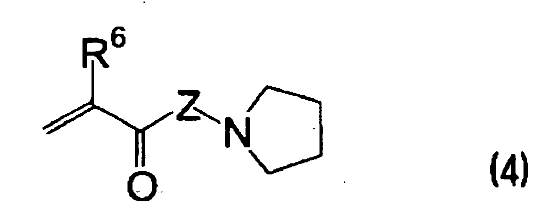

In Formulae (2) to (4), each of R¹ to R⁵ has the same meaning as defined for R¹ to R⁵ in Formula (1), and a preferable range thereof is also the same.
R⁶ represents a methyl group or a hydrogen atom, and is preferably a hydrogen atom.

Z represents a divalent connecting group or a single bond, and is preferably an oxygen atom or an alkylene group formed by removing the hydrogen atom from the alkyl group represented by the aforementioned R¹, more preferably an alkylene group having 1 to 20 carbon atoms, and especially preferably an alkylene group having 3 to 12 carbon atoms.

The alkylene group represented by Z may contain a divalent group selected from - CO-, -O-, -S- or -NR⁷- in the methylene chain comprising methylene (-CH₂-) group(s), and those having an ether (-O-) bond in the alkylene chain comprising the methylene group(s) are preferred.
Among them, those having an ether (-O-) bond at both the terminals of the alkylene chain are especially preferable.
Herein, R⁷ is a hydrogen atom or is the same as R¹ which is an alkyl group as mentioned above. Further, in the case where R⁷ has the same meaning as R¹, a preferable range thereof is the same as in R¹.

Herein, as the alkylene group represented by Z, an alkylene group having about 3 to 12 carbon atoms is especially preferfable, and specific examples thereof include, for example, a propylene group, a butylenes group, an octylene group, a nonylene group, and the like. The chain structure comprising the methylene group(s) of these alkylene groups may contain the aforementioned divalent group selected from -CO-, -O-, -S- or -NR⁷-. Further, these divalent connecting groups may be a divalent connecting group composed of a combination of two or more thereof.

A is a divalent organic group, and is preferably a methylene (-CH₂-) group or an oxygen atom (-O-).

Specific examples of (A) a specific cyclic amine compound [listed compounds (A-1) to (A-26)], which are preferably usable in the invention, are described below, but the invention is not limited thereto. In the case where stereoisomers may exist in each of the listed compounds, any of these stereoisomers may be used, and a mixture of such stereoisomers may also be used.

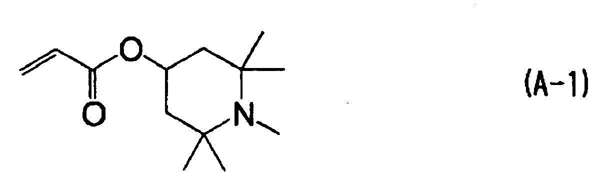

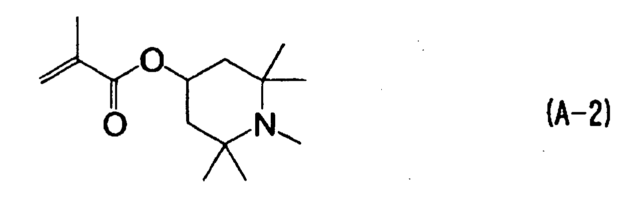

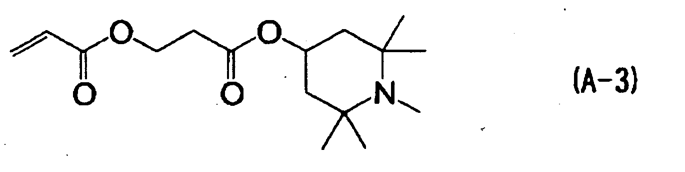

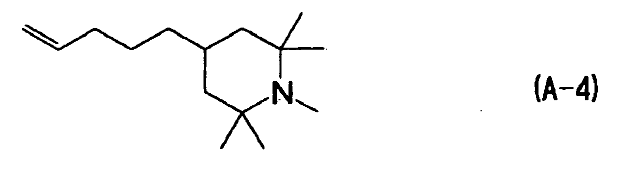

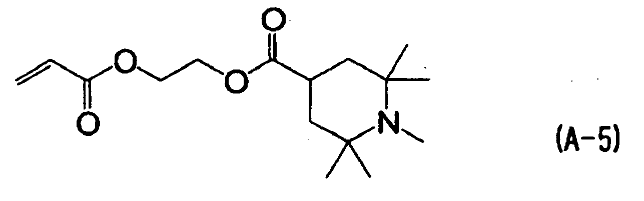

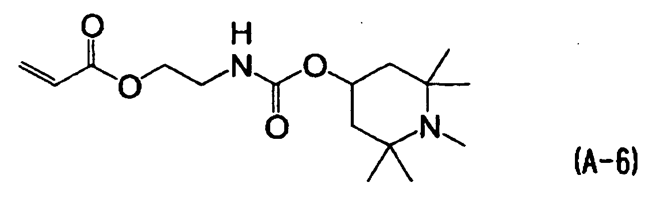

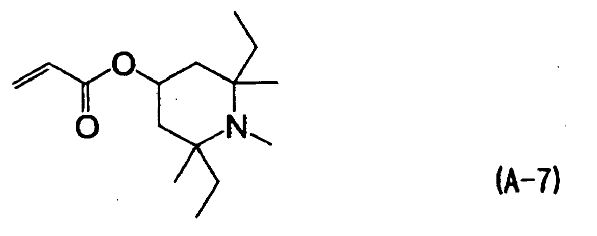

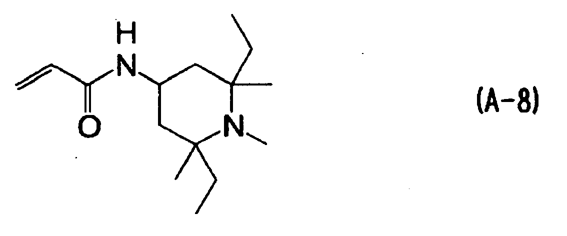

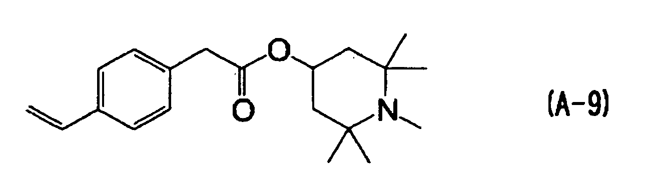

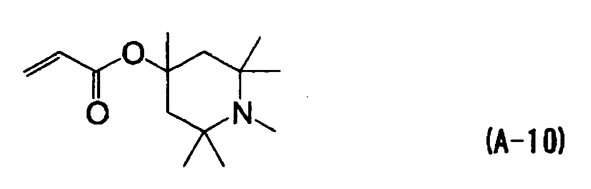

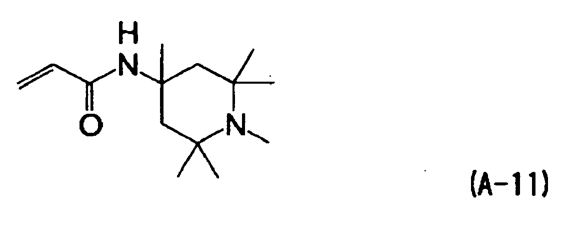

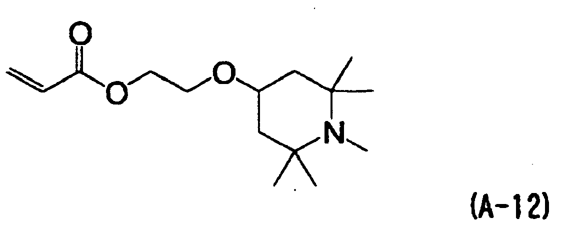

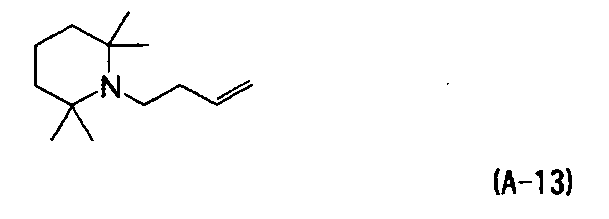

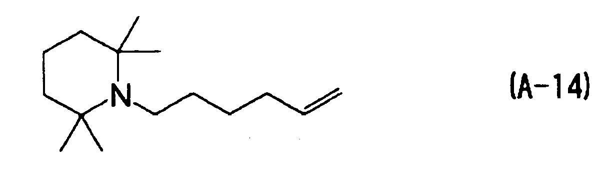

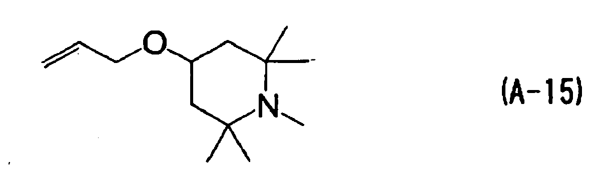

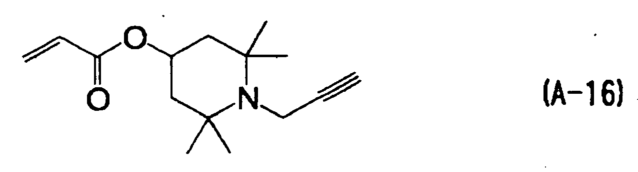

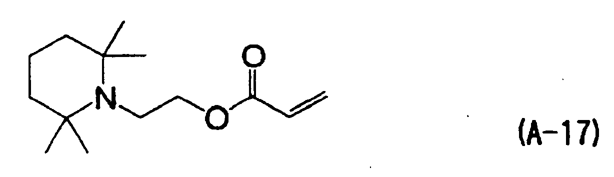

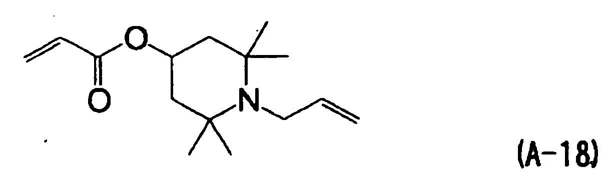

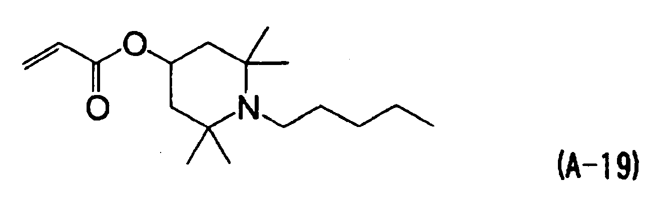

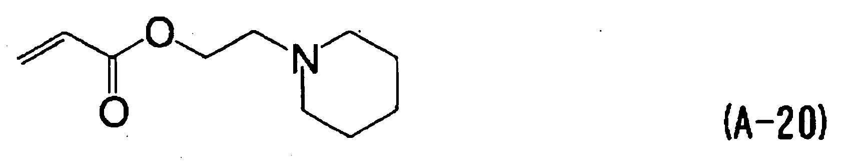

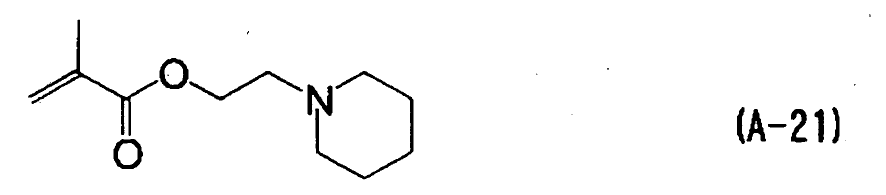

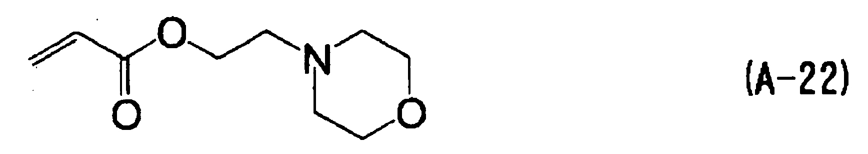

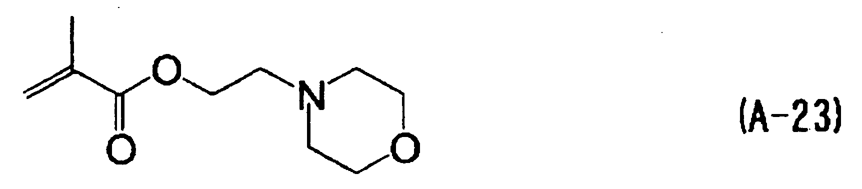

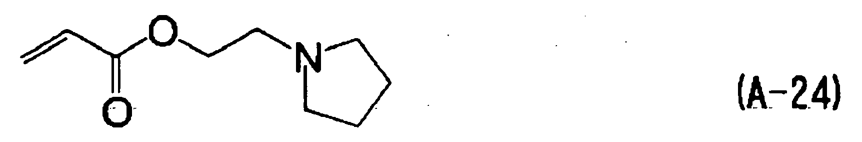

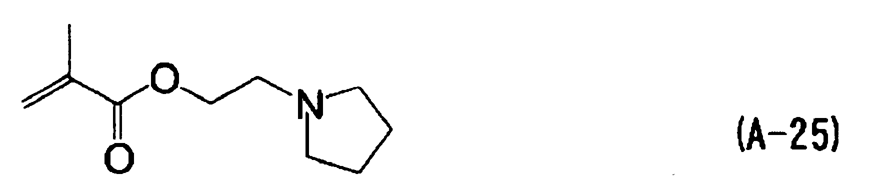

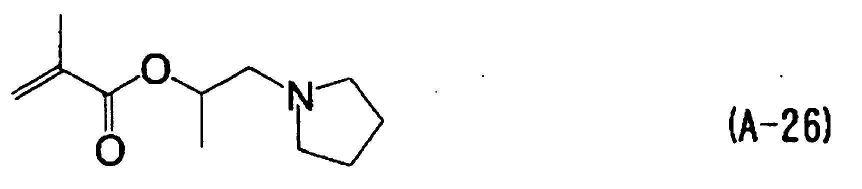

Among them, (A-1), (A-2), (A-3), (A-7), (A-12), and (A-17), each having a (metha)acryloyl group in the molecule, are preferable, (A-1) and (A-2) are more preferable, and (A-1) is especially preferable.

The specific cyclic amine compounds can be prepared by the known synthetic methods as described in, for example, Makromolekulare Chemie, vol. 181, No. 3, p. 595-634 (1980), Journal of Applied Polymer Science. vol. 69, No. 13, p. 2649-2656, (1998), Journal of Applied Polymer Science, vol. 75, No. 9, p. 1103-1114, (2000), Polymers for Advanced Technologies, vol. 13, p. 247-253, (2002), and JP-A No. 3-251569, and they are also commercially available as FANCRYL FA-711MM (trade name, manufactured by Hitachi Chemical Co., Ltd.,) and the like.

From a viewpoint of curing speed and flexibility after curing, and aptitude of ink composition for inkjet, the content of (A) a specific cyclic amine compound in the ink composition of the invention is preferably in a range of 1 to 50% by mass, based on the total mass of the ink composition, and more preferably in a range of 2 to 30% by mass, and further preferably in a range of 2 to 25% by mass.
Further, the (A) a specific cyclic amine compound may be used singly or in combination of two or more thereof.

### <(B) a compound having a polymerizable unsaturated bond and an alicyclic structure in the molecule>

The ink composition for inkjet-recording of the invention is characterized in that it comprises (B) a compound having a polymerizable unsaturated bond and an alicyclic structure in the molecule (hereinafter, appropriately referred to as "specific alicyclic monomer").
One of characteristic components in the invention, i.e. (B) "a compound having a polymerizable unsaturated bond and an alicyclic structure in the molecule (specific alicyclic monomer)", will be explained in detail.

As the (B) a specific alicyclic monomer usable in the invention, it is possible to use, without any limitation, any compounds having at least one polymerizable unsaturated bond and at least one alicyclic structure in the molecule.
Examples of the polymerizable unsaturated bond in the component (B) include preferably a radical polymerizable double bond. In order to obtain a low viscosity composition suitable for the ink composition for inkjet-recording and in view of being able to obtain a flexible cured film in the image formation, the number of the polymerizable unsaturated bonds in a specific alicyclic monomer is preferably 1 to 3, more preferably 1 to 2, and especially preferably 1.

A preferable functional group containing a polymerizable unsaturated bond includes, for example, a (metha)acryloyl group, an allyl group, a styryl group, a vinyloxy group, and the like, and in view of curing sensitivity of an ink composition, a (metha)acryloyl group is preferred, and in particular, an acryloyl group is preferred.

As an example of alicyclic structures, any aliphatic ring structures can be used, and the ring which constitutes a ring structure is preferably a 3- to 7-membered ring, more preferably a 4- to 7-membered ring, and especially preferably a 5- to 6-membered ring.
Preferably, the bond which forms an alicyclic structure may be mainly a single bond, but may contain a double bond.

Among the alicyclic structures, an aliphatic fused ring structure which is formed through annelation of a plurality of rings is preferred. In addition, among the alicyclic structures, a bicyclo ring and a tricyclo ring having a bridged bond are more preferable, and those having a double bond in the molecule are especially preferable.

The bicyclo or tricyclo ring of the invention refers to a tricylo ring where three times are required for the number of cleaving bonds between the ring atoms into the open chain structure and a bicyclo ring where two times are required for the number of cleaving blonds between the ring atoms into the open chain structure, and such a ring structure is called a tricyclo ring and a bicyclo ring. The atoms forming a ring in the structure are not particularly limited, but a ring comprising oxygen atom and carbon atom is preferable, and a ring comprising carbon atoms is further preferable. The number of carbon atoms forming a ring structure is preferably 6 to 18, and more preferably 7 to 12.

The ring forming an alicyclic structure may have a substituent if introducible, and examples of a preferable substituent include a relatively short chain alkyl group having about 1 to 4 carbon atom(s), and a methyl group or an ethyl group are more preferable, and a methyl group is especially preferable.
Further, a hetero atom such as oxygen atom, sulfur atom and the like may be contained as a ring-constituting component.

In the (B) a specific alicyclic monomer of the invention, the alicyclic structure is linked to a polymerizable unsaturated bond via a connecting group, and any position of such an alicyclic structure may be linked to the polymerizable unsaturated bond.

The (B) a specific alicyclic monomer includes specifically compounds represented by Formula (5), i.e., compounds wherein a polymerizable unsaturated bond is linked to an alicyclic structure via a required connecting group is preferred.

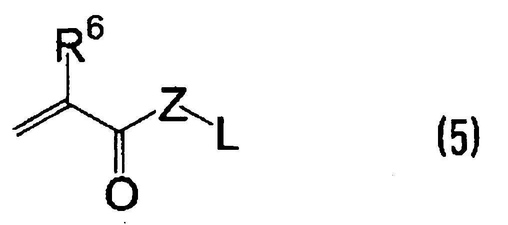

In Formula (5), R⁶ is a methyl group or a hydrogen atom, and is preferably a hydrogen atom.

Z¹ represents a divalent connecting group or a single bond, and is preferably an oxygen atom or an alkylene group formed by removing the hydrogen atom from the alkyl group represented by the aforementioned R¹, more preferably an alkylene group having 1 to 20 carbon atoms, and especially preferably an alkylene group having 3 to 12 carbon atoms.

The alkylene group represented by Z¹ may contain a divalent group selected from -CO-, -O-, -S- or -NR⁷- in the methylene chain comprising methylene (-CH₂-) group(s), and those having an ether (-O-) bond in the alkylene chain comprising the methylene group(s) are preferred. Among them, those having an ether (-O-) bond at both the terminals of the alkylene chain are especially preferable.
Herein, R⁷ is a hydrogen atom or is the same as R¹ which is an alkyl group as mentioned above. Further, in the case where R⁷ has the same meaning as R¹, a preferable range thereof is the same as in R¹.

Herein, as the alkylene group represented by Z¹, an alkylene group having about 3 to 12 carbon atoms is especially preferable, and specific examples thereof include, for example, a propylene group, a butylenes group, an octylene group, a nonylene group, and the like. The chain structure comprising the methylene group(s) of these alkylene groups may contain the aforementioned divalent group selected from -CO-, -O-, -S- or -NR⁷-. Further, these divalent connecting groups may be a divalent connecting group composed of a combination of two or more thereof.

L represents an alicyclic structure, and it is preferably a fused structure, including preferably bicyclo[2.2.1]heptane nucleus and tricyclo[5.2.1.0^{2,6}]decane nucleus. Further, a structure having a double bond in the ring such as bicyclo ring and tricyclo ring is more preferable.

Specific examples of (B) a specific alicyclic monomer [listed compounds (B-1) to (B-31)], which are preferably used in the invention, are described below, but the invention is not limited thereto. In the case where stereoisomers may exist in each of the listed compounds, any of these stereoisomers may be used, and a mixture of such stereoisomers may also be used.

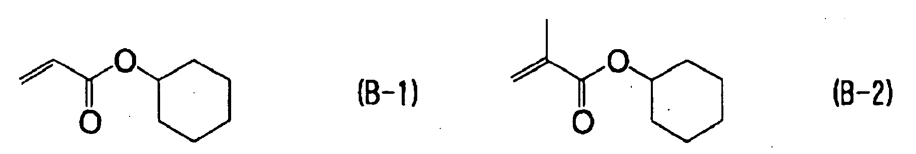

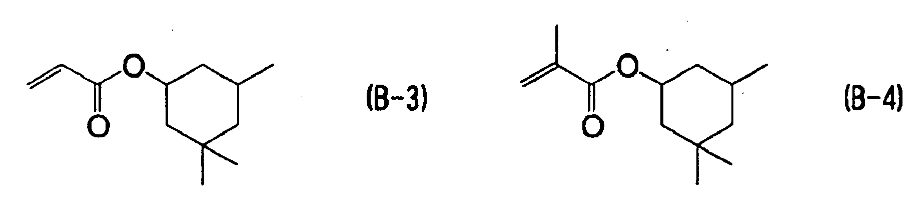

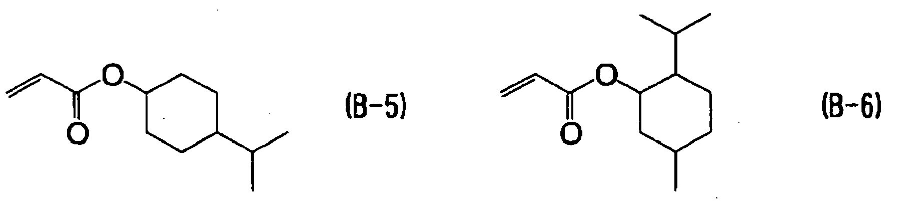

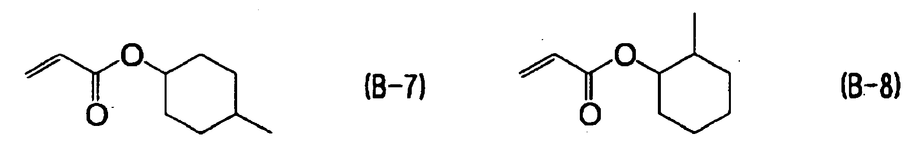

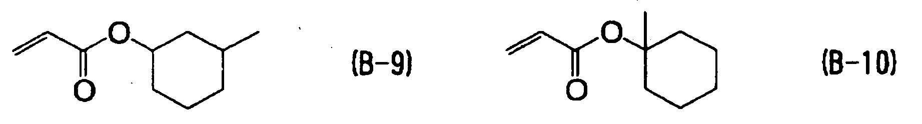

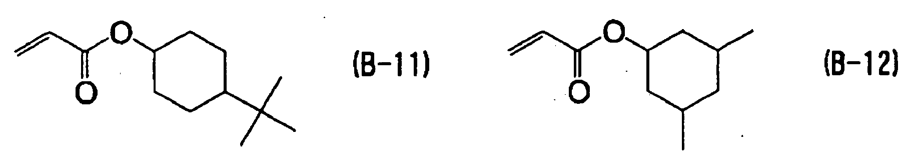

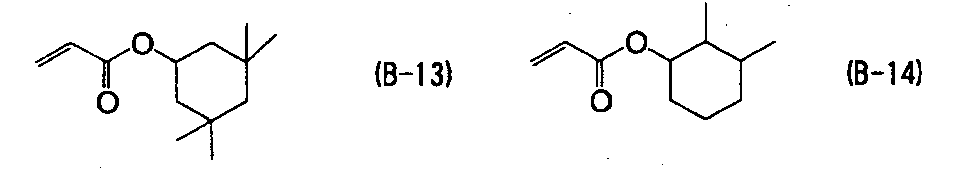

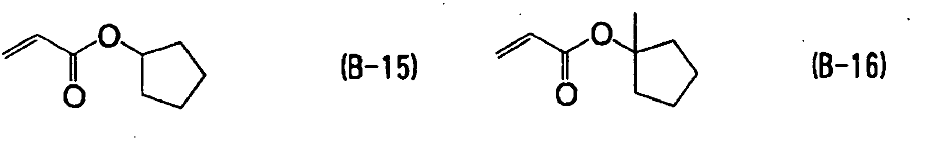

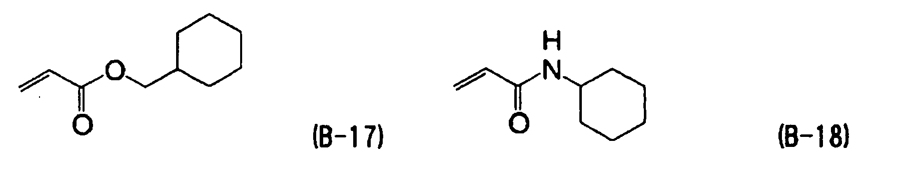

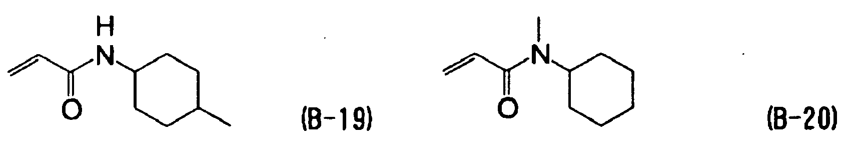

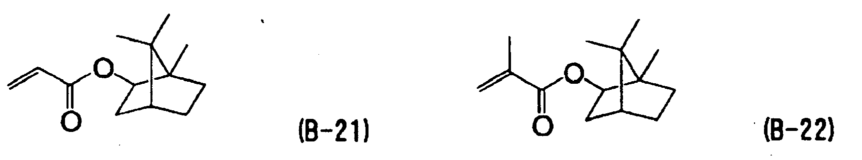

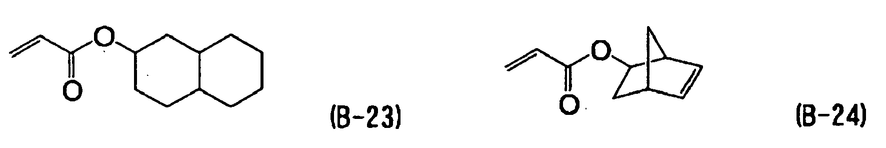

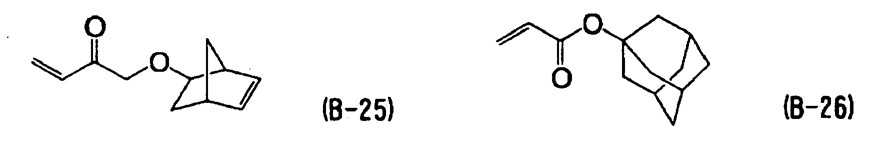

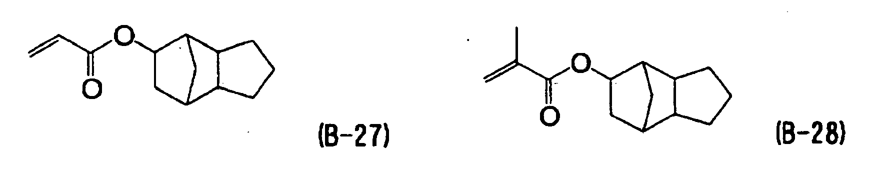

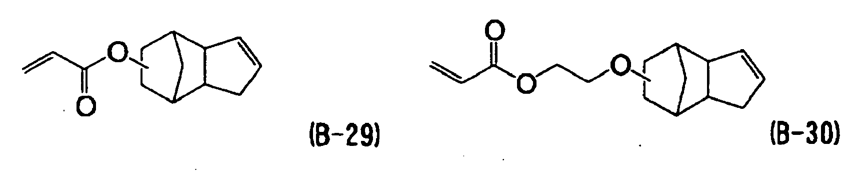

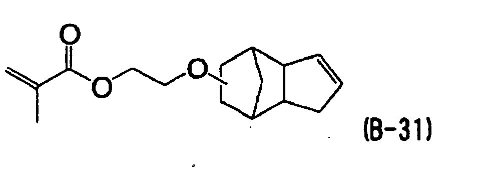

Among them, (B-21), (B-22), (B-26), (B-27), (B-28), (B-29), (B-30), and (B-31) are preferable, and (B-21), (B-27), (B-29), (B-30), and (B-31) are more preferable, and (B-29) and (B-30) are especially preferable.

The (B) a specific alicyclic monomer can be prepared by the known synthetic methods as described in, for example, US patent No. 3,087,962, J.Chem.Soc.Chem.Commun., vol. 14, p. 1073-1074 (1986), US patent No. 4,097,677, New Journal of Chemistry, vol. 17, No. 1, p. 835-841, (1993) and the like, and they are also commercially available as SR423 (manufactured by Sartomer Japan Inc.), SR506 (manufactured by Sartomer Japan Inc.), SR535 (manufactured by Sartomer Japan Inc.), SR833 (manufactured by Sartomer Japan Inc.), CD406 (manufactured by Sartomer Japan Inc.), A-IB (manufactured by Shin-Nakamura Chemical Co., Ltd.), IB (manufactured by Shin-Nakamura Chemical Co., Ltd.), FANCRYL FA-511A (manufactured by Hitachi Chemical Co., Ltd.), FANCRYL FA-511A (manufactured by Hitachi Chemical Co., Ltd.), FANCRYL FA-512A (manufactured by Hitachi Chemical Co., Ltd.), FANCRYL FA-513A (manufactured by Hitachi Chemical Co., Ltd.), FANCRYL FA-512M (manufactured by Hitachi Chemical Co., Ltd.), and the like.

From a viewpoint of curing speed and flexibility after curing, and aptitude of ink composition for inkjet, the content of (B) a specific alicyclic monomer in the ink composition of the invention is preferably in a range of 3 to 70% by mass, based on the total mass of the ink composition, and more preferably in a range of 5 to 60% by mass, and further preferably in a range of 10 to 50% by mass.
Further, the (B) a specific alicyclic monomer may be used singly or in combination of two or more thereof.

The (A):(B) ratio (by mass) of (A) a specific cyclic amine compound and (B) a specific alicyclic monomer contained in the ink composition is in a range of preferably 2:98 to 70:30, more preferably 3:97 to 60:40, and especially preferably 5:95 to 50:50.

In a preferable exemplary embodiment in the ink composition of the invention, the content of (B) a specific alicyclic monomer may be zero in the case where that of (A) a specific cyclic amine compound is 12 to 50% by mass. From a viewpoint of balance between curing speed and adhesiveness to substrate, as well as flexibility after curing and aptitude of ink composition for inkjet, the content of (A) a specific cyclic amine compound, in the case where the content of (B) a specific alicyclic monomer is substancially zero, is required to be 12 to 50% by mass, based on the total mass of the ink composition for inkjet-recording, more preferably 15 to 40% by mass, and furthermore preferably 15 to 35% by mass. When the addition amount is less than 12% by mass, sufficiently improved curing speed, i.e. improved effect on sensitivity is not obtained, and when such an addition amount is more than 50% by mass, improved effect is not observed and to the contrary, the contents of other curing components and colorants are limited, thereby not permitting to obtain a film with desirable characteristics after being cured, and thus, both cases are not desirable.

### <(C) Radical polymerization initiator >

The ink composition according to the invention further contains a radical polymerization initiator. Any conventionally-known polymerization initiator can be appropriately selected and used as the radical polymerization initiator of the ink composition of the invention in accordance with kinds of polymerizable compounds used therewith and utilization purposes of the ink composition. It is preferable that the polymerization initiator used in the invention is a radical polymerization initiator.
The radical polymerization initiator used in the ink composition of the invention is a compound which generates a polymerization initiation starter upon absorbing external energy. The external energy is roughly classified into heat, to which thermal polymerization initiators are applied, and radiation ray, to which photopolymerization initiators are applied. Examples of the radiation ray includeγ-rays, β-rays, electron beams, ultraviolet rays, visible rays, and infrared rays.
Any conventionally-known thermal polymerization initiators and photopolymerization initiators can be used in the invention.

Preferable examples of the radical polymerization initiator used in the invention include (a) aromatic ketones, (b) acylphosphine oxide compounds, (c) aromatic onium salt compounds, (d) organic peroxides, (e) thio compounds, (f) hexaarylbiimidazole compounds, (g) ketoxime ester compounds, (h) borate compounds, (i) azinium compounds, (j) metallocene compounds, (k) active ester compounds, (1) compounds containing a carbon-halogen bond, and (m) alkylamine compounds.
The radical polymerization initiator may be used singly or in combination of two or more thereof in the invention. It is preferable to use two or more kinds of the radical polymerization initiators from the view point of effective initiation in the polymerization reaction.

The radical polymerization initiator of the invention is preferably in a range of 0.01 to 35% by mass, more preferably 0.1 to 30% by mass, and still more preferably 0.5 to 30% by mass, based on the total amount of the specific cyclic amine compound, specific alicyclic monomer and colorant mentioned later, or based on the total amount of the specific cyclic amine compound, specific alicyclic monomer and other polymerizable compound when used in combination of the specific cyclic amine compound, specific alicyclic monomer, colorant and other polymerizable compound.

Moreover, the radical polymerization initiator is suitably contained in a range of a mass ratio of polymerization initiator:sensitizing dye of 200:1 to 1:200, preferably 50:1 to 1:50, and more preferably 20:1 to 1:5, based on the sensitizing dye which may be used if needed as mentioned later.

### <(D) Colorant>

The ink-jet recording composition of the invention is not essential to be used to form a colored image, in general. However, when the ink composition of the invention is used to form a colored image, the ink composition may contain at least one colorant.

While the colorant to be used in the composition of the invention is not particularly limited, the colorant may be arbitrarily selected from known colorants such as pigments, oil-soluble dyes, water-soluble dyes, or disperse dyes. Among them, pigments and oil-soluble dyes are preferable due to their resistance against weathering as well as color reproducability, and pigments are more preferable.

The colorant used in the ink composition according to the invention preferably does not function as a polymerization inhibitor in the polymerization reaction, which is the curing reaction, so that the curing reaction with actinic rays is not inhibited.

### - Pigment-

The pigment for use in the invention is not particularly limited, and examples thereof include organic or inorganic pigments having the following Color Index numbers:

As for red and magenta pigments, the pigment may be Pigment Red 3, 5, 19, 22, 31, 38, 43, 48:1, 48:2, 48:3, 48:4, 48:5, 49:1, 53:1, 57:1, 57:2, 58:4, 63:1, 81,81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, or Pigment Orange 13, 16, 20, or 36.
As for blue and cyan pigments, the pigment may be Pigment Blue 1, 15, 15:1, 15:2, 15:3,15:4, 15:6, 16, 17-1, 22, 27, 28, 29, 36, or 60.
As for green pigments, the pigment may be Pigment Green 7, 26, 36, or 50.
As for yellow pigments, the pigment may be Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, or 193.
As for black pigments, the pigment may be Pigment Black 7, 28, or 26.
As for white pigments, the pigment may be Pigment White 6, 18, or 21.
One or more of these pigments can be used according to the application of the ink composition.

### -Oil-soluble dye -

Hereinafter, the oil-soluble dye for use in the invention will be described.
The oil-soluble dye for use in the invention is a dye that is substantially insoluble in water. Specifically, the oil-soluble dye has a solubility in water at 25°C (the weight of the dye soluble in 100 g of water) of 1 g or less, preferably 0.5 g or less, and more preferably 0.1 g or less. Thus, the oil-soluble dye means a so-called water-insoluble pigment or an oil-soluble colorant, and among them, an oil-soluble colorant is preferable.

When the oil-soluble dye used in the present invention is a yellow dye, the yellow dye is not particularly limited. Examples thereof include: aryl- or heteryl- azo dyes having a coupling component such as a phenol, a naphthol, an aniline, a pyrazolone, a pyridone, or an open-chain active methylene compound; azomethine dyes having a coupling component such as an open-chain active methylene compound; methine dyes such as benzylidene dyes and monomethine oxonol dyes; quinone dyes such as naphthoquinone dyes and anthraquinone dyes; as well as quinophtharone.

When the oil-soluble dye used in the present invention is a magenta dye, the magenta dye is not particularly limited. Examples thereof include: aryl- or heteryl- azo dyes having a coupling component such as a phenol, a naphthol, or an aniline; azomethine dyes having a coupling component such as a pyrazolone or a pyrazolotriazole; methine dyes such as arylidene dyes, styryl dyes, merocyanine dyes, and oxonol dyes; carbonium dyes such as diphenylmethane dyes, triphenylmethane dyes, and xanthene dyes; quinone dyes such as naphthoquinones, anthraquinones, and anthrapyridones; and fused polycyclic dyes such as dioxazine dyes.

When the oil-soluble dye used in the present invention is a cyan dye, the cyan dye is not particularly limited. Examples thereof include azomethine dyes such as indoaniline dyes, indophenol dyes, and dyes having a pyrrolotriazole as the coupling component; polymethine dyes such as cyanine dyes, oxonol dyes, and merocyanine dyes; carbonium dyes such as diphenylmethane dyes, triphenylmethane dyes, and xanthene dyes; phthalocyanine dyes; anthraquinone dyes; aryl- or heteryl- azo dyes having a coupling component such as a phenol, a naphthol, or an aniline; and indigo thioindigo dyes.

The dye may develop a color (yellow, magenta, or cyan) only after the dissociation of a part of its chromophore. At dissociation, the counter cation may be an inorganic cation such as an alkali metal or ammonium, or an organic cation such as a pyridinium or a quaternary ammonium salt; or a polymeric cation having, as a partial structure, a cation selected from those described above.

Preferable typical examples thereof include, but are not limited to: C.I. Solvent Black 3, 7, 27, 29 and 34; C.I. Solvent Yellow 14, 16, 19, 29, 30, 56, 82, 93 and 162; C.I. Solvent Red 1, 3, 8, 18, 24, 27, 43, 49, 51, 72, 73, 109, 122, 132 and 218; C.I. Solvent Violet 3; C.I. Solvent Blue 2, 11, 25, 35, 38, 67 and 70; C.I. Solvent Green 3 and 7; and C.I. Solvent Orange 2. Particularly preferable among them are NUBIAN BLACK PC-0850, OIL BLACK HBB, OIL YELLOW 129, OIL YELLOW 105, OIL PINK 112, OIL RED 5B, OIL SCARLET 308, VALI FAST BLUE 2606, and OIL BLUE BOS (trade names, manufactured by Orient Chemical Industries); AIZEN SPILON BLUE GNH (trade names, manufactured by Hodogaya Chemical Co., Ltd.); NEOPEN YELLOW 075, NEOPEN MAZENTA SE1378, NEOPEN BLUE 808, NEOPEN BLUE FF4012, and NEOPEN CYAN FF4238 (trade names, manufactured by BASF).

### - Disperse dye-

In the invention, a disperse dye may also be additionally used in such a range of an amount that the disperse dye is soluble in a water-immiscible organic solvent. Preferable specific examples thereof include C.I. Disperse Yellow 5, 42, 54, 64, 79, 82, 83, 93, 99, 100, 119, 122, 124, 126, 160, 184:1, 186, 198, 199, 201, 204, 224 and 237; C.I. Disperse Orange 13, 29, 31:1, 33, 49, 54, 55, 66, 73, 118, 119 and 163; C.I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356 and 362; C.I. Disperse Violet 33; C.I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365 and 368; and C.I. Disperse Green 6:1 and 9.
Referring to the colorant preferable and suitable for use in the ink composition of the invention, it is preferable to select a compound which does not function as a polymerization inhibitor in the polymerization reaction, which is a curing reaction, in view of no reduction in the sensitivity to such a curing reaction with actinic radiation.

After addition to the ink composition or the ink composition for ink jet recording according to the invention, the colorant for use in the invention is preferably dispersed in the ink to a suitable degree. Various dispersing machines, such as ball mills, sand mills, attriters, roll mills, agitators, Henschel mixers, colloid mills, ultrasonic wave homogenizers, pearl mills, wet jet mills, or paint shakers, may be used for dispersion of the colorant.

In an embodiment, a dispersant is added at dispersing the colorant. The dispersant is not particularly limited, and is preferably a polymer dispersant. The polymer dispersant may be selected, for example from SOLSPERSE series products manufactured by Zeneca. A synergist suitable for the pigment may be used as a dispersion aid. In the present invention, the dispersant and the dispersion aid are added preferably in an amount of 1 to 50 parts by weight with respect to 100 parts by weight of the colorant.

The colorant may be directly added to the inkjet composition together with other components. Alternatively, the colorant may be, in advance, added and uniformly dispersed to or dissolved in a solvent or a dispersing medium such as a specific polyvinylamide compound used in the invention or the other additional polymerizable compound which is used if desired, so as to improve the dispersibility.

In the invention, the colorant is preferably compounded by being added to one or a mixture of two or more of the specific cyclic amine compound(s) or the specific ali-cyclic monomer(s) in advance in view of the prevention of the occurrence of problems such as the deterioration in solvent resistance caused by the remaining solvent in the cured image and VOCs (volatile organic compounds) caused by the residual solvent. The polymerizable compound to be used is preferably a monomer with a lowest viscosity, from the point of dispersion efficiency only.

These colorants may be suitably selected and used singly or in combination of two or more thereof depending on a utilization purpose of the ink composition.

In a case where a colorant which exists in a form of a solid material in the ink composition for ink-jet recording in the invention, the average diameter of the particles of the colorant is preferably set in the range of 0.005 to 1.5 µm, more preferably in the range of 0.01 to 0.45 µm, and still more preferably in the range of 0.015 to 0.4 µm by selection of the colorant, the dispersant, the dispersion medium, the dispersing conditions, and the filtration conditions. By controlling the particle diameter, it becomes possible to prevent clogging in head nozzles and to maintain favorable storage stability, transparency, and curing efficiency of the inkjet composition.

While the content of colorant in the ink composition for ink-jet recording is appropriately selected in accordance with utilization purposes, in consideration of physical properties and coloring property, it is generally preferably from 1 to 20 % by mass, more preferably from 2 to 8 % by mass, based on the entire weight of the ink composition.

The ink composition for ink-jet recording according to the invention may further contain one or more other components in addition to the above required components as long as they do not impair the effects of the invention.
Explanations regarding these other components are provided hereinafter.

### <Additional polymerizable compounds>

In addition to the specific cyclic amine compound(s) or the specific ali-cyclic monomer(s), the ink composition according to the invention may further contain an additional polymerizable compound which is other than the specific polymerizable compound or the specific monomer. Examples of such additional compound that can be used in combination with the specific polymerizable compound or the specific monomer include radical polymerizable compound and cation-polymerizable compound. The additional polymerizable compound may be appropriately selected and used in consideration of desired characteristics and a relationship with the radical polymerization initiator.

In the invention, a total content of the polymerizable compounds, namely, a total content of the specific cyclic amine compound(s) or the specific ali-cyclic monomer(s) and a total content of the additional polymerizable compound which can be simultaneously used therewith is in a range of 45 to 95% by mass, and preferably in a range of 50 to 90% by mass on the basis of the mass of the total content of the ink composition for ink-jet recording according to the invention.

Further, in the ink composition for ink-jet recording according to the invention, the content of the specific cyclic amine compound(s) and the specific ali-cyclic monomer(s) is preferably 10 to 80% by mass, more preferably 15 to 70% by mass, and further preferably 20 to 60% by mass on the basis of the total content of the polymerizable compounds (namely, the total content of the specific cyclic amine compound(s), the specific ali-cyclic monomer(s), and the additional polymerizable compound(s)) contained in the ink composition.

Explanations regarding the additional polymerizable compound which can be used in the invention are provided hereinafter. The radical-polymerizable compound is a compound having a radical-polymerizable ethylenic unsaturated bond, and may be any compound as long as it has at least one radical-polymerizable ethylenic unsaturated bond in the molecule. The chemical form of the compound may be a monomer, oligomer, polymer, or the like. The radical-polymerizable compound may be used singly or in combination of two or more thereof with an arbitrary mixing ratio for improving desired properties. It is preferable that two or more multifunctional compounds are used in combination in view of controlling the reactively and the properties such as physical properties.

Examples of the radical-polymerizable compound having a radical-polymerizable ethylenic unsaturated bond include: unsaturated carboxylic acids such as acrylic acid, methacrylic acid, itaconic acid, crotonic acid, isocrotonic acid or maleic acid; salts thereof, and anhydrides thereof; acrylonitrile; styrene; various unsaturated polyesters; unsaturated polyethers; unsaturated polyamides; unsaturated urethanes; and the like.

Specific examples thereof include esters or amides of acrylic acid such as 2-hydroxyethyl acrylate, butoxyethyl acrylate, carbitol acrylate, cyclohexyl acrylate, tetrahydrofurfuryl acrylate, benzyl acrylate, tridecyl acrylate, 2-phenoxyethyl acrylate, bis(4-acryloyloxypolyethoxyphenyl)propane, polyethylene glycol diacrylate, polypropylene glycol diacrylate, dipentaerythritol tetraacrylate, trimethylol propane triacrylate, oligoester acrylate, N-methylol acrylamide, diacetone acryloamide, epoxyacrylate, isobornyl acrylate, dicyclopentenyl acrylate or dicyclopentenyloxyethyl acrylate; esters or amides of methacrylic acid such as methyl methacrylate, n-butyl methacrylate, allyl methacrylate, glycidyl methacrylate, benzyl methacrylate, dimethylaminomethyl methacrylate, polyethylene glycol dimethacrylate, polypropylene glycol dimethacrylate, or 2,2-bis(4-methacryloxypolyethoxyphenyl)propane; and esters or amides of an allyl compound such as allyl glycidyl ether, diallyl phthalate, or triallyl trimellitate. More specifically, radical polymerizable or crosslinkable monomers, oligomers and polymers commercially available or known in the art are also usable, such as those described in Shinzo Yamashita Ed., "Crosslinking Agent Handbook", (1981, Taisei Publishing); Kiyoshi Kato Ed., "UV-EB Curing Handbook (Raw Material)" (1985, Kobunshi Kankokai); RadTech Japan Ed., "Application and Market of UV-EB Curing Technology", p. 79, (1989, CMC); and Eiichiro Takiyama, "Polyester Resin Handbook", (1988, Nikkankogyo Shimbun), the disclosures of which are incorporated herein by reference.

Examples of the radicar-polymerizable compound which may be used in the invention further include photo-curing polymerizable compounds used in the photopolymerizable compositions described in JP-B No. 7-31399 and JP-A Nos. 7-159983, 8-224982, 10-863, 9-134011 and 2004-514014.

Preferable examples of the radical-polymerizable compound further include a vinyl ether compound. Specific examples thereof include divinyl or trivinyl ether compounds such as ethylene glycol divinyl ether, ethylene glycol monovinyl ether, diethylene glycol divinyl ether, triethylene glycol monovinyl ether, triethylene glycol divinyl ether, propylene glycol divinyl ether, dipropylene glycol divinyl ether, butanediol divinyl ether, hexanediol divinyl ether, cyclohexane dimethanol divinyl ether, hydroxyeyhyl monovinyl ether, hydroxynonyl monovinyl ether, or trimethylolpropane trivinyl ether; monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexane dimethanol monovinyl ether, n-propyl vinyl ether, isopropyl vinyl ether, isopropenyl ether-o-propylene carbonate, dodecyl vinyl ether, diethylene glycol monovinyl ether, or octadecyl vinyl ether; and the like. Commercial monomers such as Rapi-Cure DVE-3 or Rapi-Cure DVE-2 (both produced by ISP Europe) may also be used as the vinyl ether compound.

Among these vinyl ether compounds, from the standpoint of curability, adhesion property, and surface hardness, divinyl ether compounds and trivinyl ether compounds are preferable, and divinyl ether compounds are particularly preferable. The vinyl ether compounds may be used singly or in combination of two or more thereof in accordance with necessity.

Examples of the additional polymerizable compound further include (meth)acrylic acid esters such as a (meth)acrylic monomer, a (meth)acrylic prepolymer, an epoxy monomer, an epoxy prepolymer, an urethane monomer or an urethane prepolymer (hereinafter arbitrarily called as an acrylate compound). Specific examples of such additional polymerizable compound include compounds described below.

Namely, specific examples of the acrylate compound include 2-ethylhexyldiglycol acrylate, 2-hydroxy-3-phenoxypropyl acrylate, 2-hydroxybutyl acrylate, hydroxypivalic acid neopentylglycol diacrylate, 2-acryloyloxyethyl phtharic acid, methoxy-polyethylene glycol acrylate, tetramethylolmethane triacrylate, 2-acryloyloxyethyl-2-hydroxyethyl phtharic acid, dimethyloltricyclodecane diacrylate, ethoxylated phenyl acrylate, 2-acryloyloxyethyl succinic acid, nonylphenol EO adduct acrylate, modified glycerin triacrylate, bisphenol A diglycidyl ether acrylic acid adduct, modified bisphenol A diacrylate, phenoxy-polyethylene glycol acrylate, 2-acryloyloxyethylhexahydrophthalic acid, bisphenol A PO adduct diacrylate, bisphenol A EO adduct diacrylate, dipentaerythritol hexaacrylate, pentaerythritol triacrylate tolylene diisocyanate urethane prepolymer, lactone-modified flexible acrylate, butoxyethyl acrylate, propylene glycol diglycidyl ether acrylic acid adduct, pentaerythritol triacrylate hexamethylenediisocyanate urethane prepolymer, 2-hydroxyethyl acrylate, methoxydipropylene glycol acrylate, ditrimethylolpropane tetracrylate, stearyl acrylate, isoamyl acrylate, isomyristyl acrylate, isostearyl acrylate, and lactone-modified acrylate.

These acrylate compounds are preferable since they are polymerizable compounds conventionally used in UV curable inks as they are less irritative or less sensitizing to skin (having small inductivity of rashes on the skin) and can provide a stable ink-ejecting property with a relatively low viscosity as well as a good polymerization sensitivity and a good adhesion to a recording medium.
Even though these monomers described as the additional polymerizable compounds have a low molecular weight, each of them has a low sensitizing property to skin, a high reactivity, a low viscosity, and an excellent adhesion to the recording medium.

From the viewpoint of improving sensitivity, resistance to bleeding, and adhesion property to recording media, it is preferable to additionally use, as a component of the additional polymerizable compound, a combination of the monoacrylate and either a polyfunctional acrylate monomer or oligomer having a molecular weight of 400 or more (preferably 500 or more).

It is particularly preferable to use a combination of a monoacrylate monomer selected from the above, a component selected from the specific polyvinylamide compound, and either the polyfunctional acrylate monomer or the polyfunctional acrylate oligomer in an ink composition used for recording to flexible recording media such as PET films or PP films, because such a combination can further improve the adhesion to recording media by providing flexibility to a film formed by the ink composition while increasing a strength of the film.

In a particularly preferable embodiment of the invention uses a combination of three kinds of polymerizable compound (, namely, a monofunctional acrylate monomer, a bifunctional acrylate monomer, and a polyfunctional acrylate monomer having tri- or higher-functionality). Such a combination provides improvements in the sensitivity, resistance to bleeding, and adhesion to recording media while securing safety.

The monoacrylate is preferably stearyl acrylate, isoamyl acrylate, isomyristyl acrylate, or isostearyl acrylate since they provide high sensitivity and low shrinking property to prevent curling, as well as preventing bleeding and odor of printed materials and reduction of cost of an irradiation apparatus.

The oligomer which can be used in combination with the monoacrylate includes especially preferably an epoxy acrylate oligomer and an urethane acrylate oligomer.
In addition, the methacrylate shows a lower irritant property to the skin than the acrylate. Among the above compounds, a case where the amount used of an alkoxy acrylate is 70% by mass or less and the remainder is the amount of an acrylate is preferable, because it has good properties.

In the invention, when any one of the acrylate compounds as described above is used as the additional polymerizable compound, an amount of the acrylate compound is preferably 30% by mass or more, more preferably 40% by mass or more and, still more preferably 50% by mass or more based on a total mass of the additional polymerizable compound(s). Further, all of the additional polymerizable compounds to be simultaneously used can be selected from among the above-described acrylate compounds.

The selection of the polymerization initiator and the polymerizable compound in the invention may be done in accordance with various purposes such as the prevention of the deterioration in sensitivity caused by the light-shielding effect of the colorant used in the ink composition. For example, the ink composition may contain a combination of the radical polymerizable compound and the radical polymerization initiator. Alternatively, the ink composition may be formed as a radical-cation hybrid curable ink using both of the combination of the radical polymerizable compound and the radical polymerization initiator and a combination of a cation-polymerizable compound and a cation polymerization initiator.

The cationic polymerizable compound for use in the invention is required to initiate polymerization reaction in the presence of the acid generated by an agent that optically generates acid and to cure, and otherwise there is no particular limit thereto. The cationic polymerizable compound can be any of cationic polymerizable monomers known as photo-cationic polymerizable monomers. Examples of the cation polymerizable monomers include epoxy, vinyl ether, and oxetane compounds described in JP-A Nos. H06-9714, 2001-31892, 2001-40068, 2001-55507, 2001-310938, 2001-310937, and 2001-220526.

For example, polymerizable compounds contained in a cationic polymerizable, photocurable resin are also known as the cationic polymerizable compounds. In recent years, polymerizable compounds contained in photocationic polymerizable, photocurable resins sensitized to visible light within the wavelength region of 400 nm or more are disclosed in JP-A Nos. H06-43633 and H08-324137. These can also be used in the ink composition of the invention.

Examples of a cationic polymerization initiator (photolytically acid-generating agent) to be usable in combination with the cationically polymerizable compound include a chemical amplification-type photo resist or a compound used for light cationic polymerization (Japanese Research Association for Organic Electronics Materials Ed., "Organic Materials for Imaging" (published by Bun-Shin Shuppan (1993), pp. 187 to 192). Preferable examples of the cationic polymerization initiators used in the invention will be described below.
Firstly, B(C₆F₅)₄⁻ salts, PF₆⁻ salts, AsF₆⁻ salts, SbF₆⁻ salts, or CF₃SO₃⁻ salts of aromatic onium compound of diazonium, ammonium, iodonium, sulfonium, or phosphonium can be mentioned.
Secondly, a sulfone compound which generates a sulfonic acid can be mentioned.
Thirdly, a halogenide which generates hydrogen halide can also be used.
Fourthly, an iron allene complex can be mentioned.
These cationic polymerization initiators as described above may be used singly or in a mixture thereof.

### <Sensitizing Dye>

The ink composition according to the invention may contain a sensitizing dye in order to promote degradation of the polymerization initiator caused by irradiation of actinic ray. The sensitizing dye absorbs a specific actinic radiation to take an electronically excited state. The sensitizing dye in the electronically excited state contacts the polymerization initiator to cause electron transfer, energy transfer, heat generation, or the like. As a result, the polymerization initiator undergoes a chemical change to be decomposed, thereby generating radical, acid, or base.

Compounds which are adapted to a wavelength of actinic radiation which causes generation of a polymerization starter in the polymerization initiator and used for the ink composition can be used as the sensitizing dye. In consideration of the application for curing reactions of general ink compositions, examples of the sensitizing dye according to the invention include the dyes belonging to the compound groups listed below as well as having an absorption wavelength in the wavelength range of 350 to 450 nm.

Typical examples thereof include polynuclear aromatic compounds (e.g., anthracene, pyrene, perylene, and triphenylene), thioxanthones (e.g., isopropyl thioxanthone), xanthenes (e.g., fluorescein, eosin, erythrocin, rhodamine B, and rose bengal), cyanines (e.g., thiacarbocyanine and oxacarbocyanine), merocyanines (e.g., merocyanine and carbomerocyanine), thiazines (e.g., thionine, methylene blue, and toluidine blue), acridines (e.g., acridine orange, chloroflavine, and acriflavine), anthraquinones (e.g., anthraquinone), squaryliums (e.g., squarylium), coumarins (e.g., 7-diethylamino-4-methylcoumarin) and the like. Preferable examples thereof include polynuclear aromatic compounds and thioxanthones.

More preferable examples of the sensitizing dye include the componds represented by any one of the following Formulae (1) to (V).

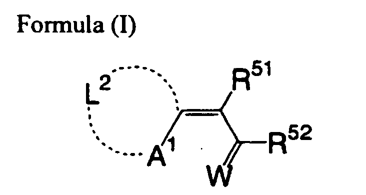

In Formula (I), A¹ represents a sulfur atom or NR⁵⁰; R⁵⁰ represents an alkyl group or an aryl group; L² represents a non-metallic atomic group which forms a base nucleus of the sensitizing dye together with the adjacent A¹ and the adjacent carbon atom; each of R⁵¹ and R⁵² independently represents a hydrogen atom or a monovalent non-metallic atomic group, and R⁵¹ and R⁵² may be bonded with each other to form an acid nucleus of the sensitizing dye; and W represents an oxygen atom or a sulfur atom.

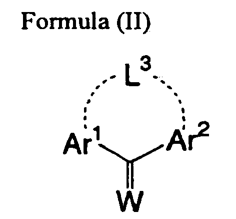

In Formula (II), each of Ar¹ and A² independently represents an aryl group, and Ar¹ and A² are linked via the bonds from L³; L³ represents -O- or -S-; and W represents an oxygen atom or a sulfur atom.

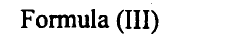

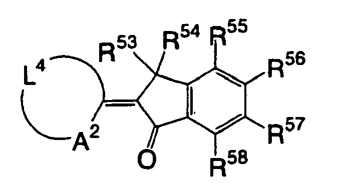

In Formula (III), A² represents a sulfur atom or NR⁵⁹; R⁵⁹ represents an alkyl group or an aryl group; L⁴ represents a non-metallic atomic group which forms a base nucleus of the sensitizing dye together with the adjacent A² and the adjacent carbon atom; and each of R⁵³, R⁵⁴, R⁵⁵, R⁵⁶ , R⁵⁷ and R⁵⁸ independently represents a monovalent non-metallic atomic group.

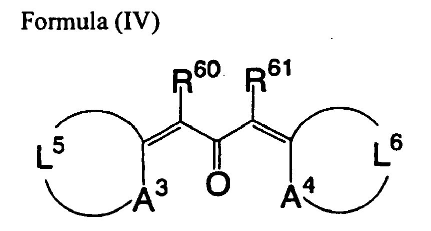

In Formula (IV), each of Ar³ and A⁴ independently represents -S-, -NR⁶²- or - NR⁶³-; each of R⁶² and R⁶³ independently represents a substituted or non-substituted alkyl group or a substituted or non-substituted aryl group; L⁵ represents a non-metallic atomic group which forms a base nucleus of the sensitizing dye together with the adjacent A³ and the adjacent carbon atom; L⁶ represents a non-metallic atomic group which forms a base nucleus of the sensitizing dye together with the adjacent A⁴ and the adjacent carbon atom; and each of R⁶⁰ and R⁶¹ independently represents a hydrogen atom or a monovalent non-metallic atomic group, and R⁶⁰ and R⁶¹ may be bonded with each other to form an aliphatic ring or an aromatic ring.

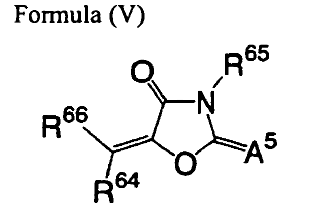

In Formula (V), R⁶⁶ represents an a aromatic ring which may have a substituent or a hetero ring which may have a substituent; A⁵ represents an oxygen atom, a sulfur atom or =NR⁶⁷; and each of R⁶⁴, R⁶⁵ and R⁶⁷ independently represents a hydrogen atom or a monovalent non-metallic atomic group, and each of the pair of R⁶⁷ and R⁶⁴ and the pair of R⁶⁵ and R⁶⁷ may be bonded with each other to form an aliphatic ring or an aromatic ring.

Specific preferable examples of the compounds represented by any one of Formulae (I) to (V) is shown below, while the invention is not limited thereby.

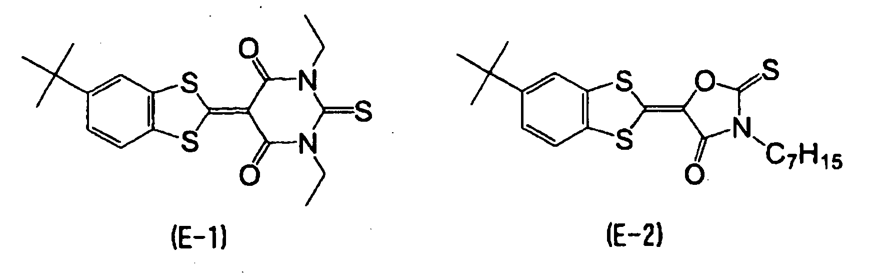

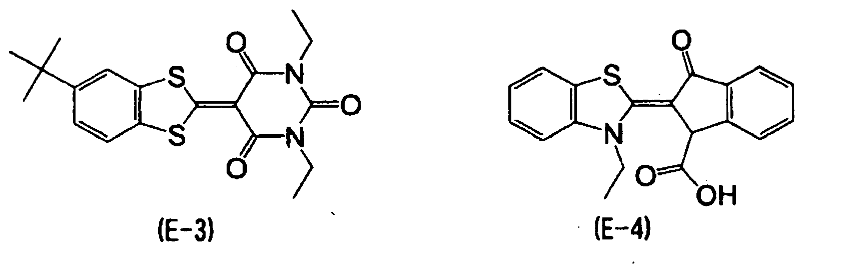

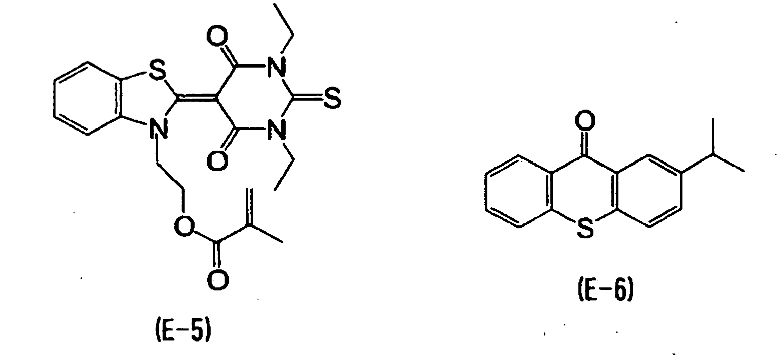

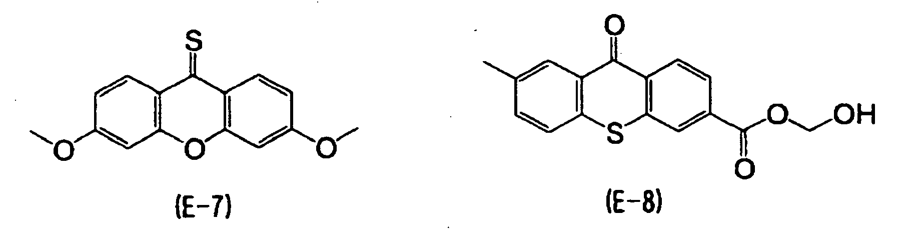

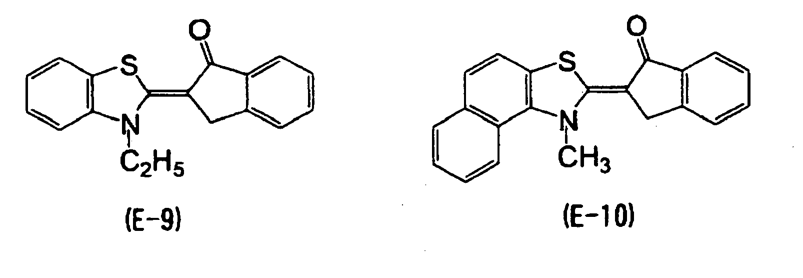

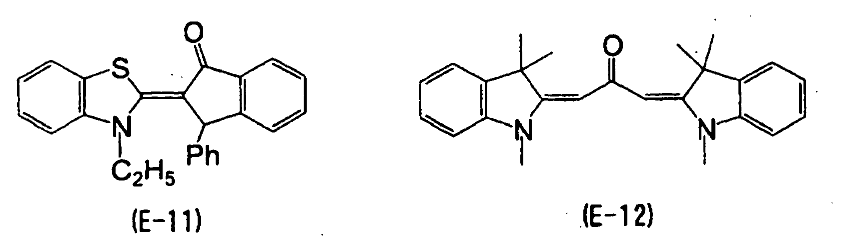

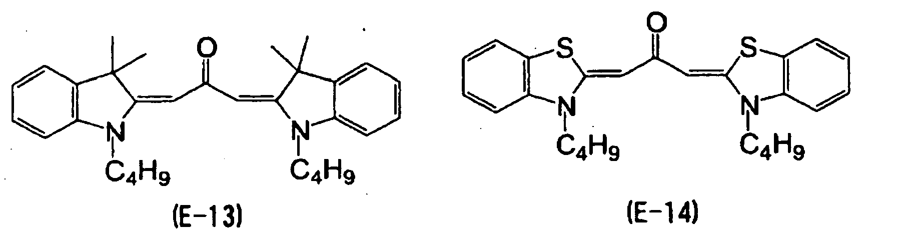

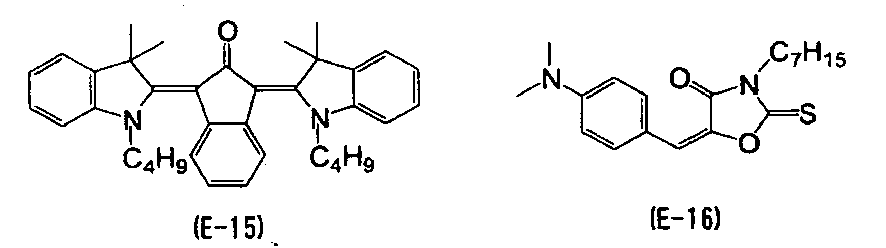

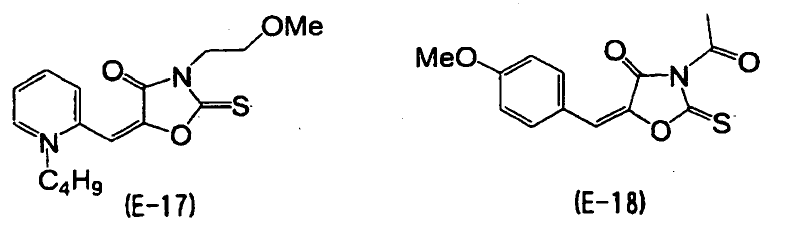

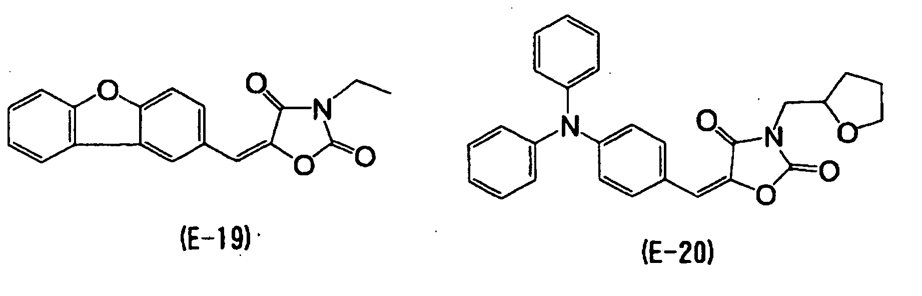

### <Cosensitizer>

In one embodiment, the ink composition for ink-jet recording according to the present invention may further contain a cosensitizer. The cosensitizer has functions of improving the sensitivity of the sensitizing dye to the actinic radiation, suppressing the polymerization inhibition by oxygen, and the like.

Examples of the cosensitizer include amines such as those described in M. R, Sander et al., "Journal of Polymer Society" vol. 10, p. 3173, (1972), JP-B No. 44-20189, JP-A Nos. 51-82102, 52-134692, 59-138205, 60-84305, 62-18537, and 64-33104 or Research Disclosure 33825; and specific examples thereof include triethanolamine, ethyl p-dimethylaminobenzoate, p-formyldimethylaniline, p-methylthiodimethylaniline, and the like.

Other examples of the cosensitizer include thiols and sulfides, such as thiol compounds described in JP-A No. 53-702, JP-B No. 55-500806, or JP-A No. 5-142772, or disulfide compounds described in JP-A No. 56-75643. Specific examples thereof include 2-mercaptobenzothiazole, 2-mercaptobenzoxazole, 2-mercaptobenzimidazole, 2-mercapto-4(3H)-quinazoline, and β-mercaptonaphthalene.

Yet other examples of the cosensitizer include amino acid compounds (e.g., N-phenylglycine), the organic metal compounds described in JP-B No. 48-42965 (e.g., tributyltin acetate), the hydrogen donors described in JP-B No. 55-34414, the sulfur compounds described in JP-A No. 6-308727 (e.g., trithiane), the phosphorus compounds described in JP-A No. 6-250387 (e.g., diethyl phosphite), and the Si-H and Ge-H compounds described in Japanese Patent Application No. 8-65779.

### <Other Components>

The ink composition according to the invention may further contain other components in accordance with necessity. Examples of such additional components include polymerization inhibitors, solvents, and the like.

A polymerization inhibitor may be added to the ink composition according to the invention for improvement in storability. When the ink composition according to the invention is applied to inkjet recording, it is preferable to heat the composition to a temperature in the range of 40 to 80°C so as to reduce the viscosity of the ink before ejection; and thus, the addition of a polymerization inhibitor is preferable for the prevention of the head clogging by thermal polymerization. The polymerization inhibitor is preferably added in an amount of 200 to 20,000ppm with respect to the total amount of the ink composition according to the invention.
Examples of polymerization inhibitors include hydroquinone, benzoquinone, p-methoxyphenol, TEMPO (2,2,6,6-tetramethyl-. piperidine-1-oxyl), TEMPOL (4-Hydroxy-2,2,6,6-tetramethyl-piperidine-1-oxyl), and cupferron AI.

Considering that the ink composition for ink-jet recording according to the invention is a radiation-curable ink composition, the composition preferably contains no solvent, so that the reaction occurs immediately after deposition to cure the ink composition. The ink composition may contain a predetermined solvent as long as it does not affect the curing speed of ink composition and the like. The solvent may be an organic solvent or water. In particular, an organic solvent may be added for improvement in adhesiveness to the recording medium (support such as paper). Addition of an organic solvent is effective for the prevention of the problem of VOCs. The amount of organic solvent is, for example, in the range of 0.1 to 5 % by weight, preferably in the range of 0.1 to 3 % by weight, with respect to the total weight of the ink composition according to the invention.

In addition, other known compounds may be added to the ink composition for ink-jet recording according to the invention in accordance with necessity. Examples of such additional compounds include a surfactant, a leveling additive, a matting agent, and a resin for adjustment of film physical properties, such as a polyester resin, a polyurethane resin, a vinyl resin, an acrylic resin, a rubber resin, or a wax. Further, addition of a tackifier that does not inhibit polymerization is also preferable in view of the improvement in adhesiveness to recording media such as polyolefin or PET. Specific examples thereof include the high-molecular weight adhesive polymers described in JP-A No. 2001-49200; pp. 5 to 6 (e.g., copolymers of a (meth)acrylic ester of an alcohol having an alkyl group having 1 to 20 carbon atoms, copolymers of a (meth)acrylic ester of an alicyclic alcohol having 3 to 14 carbon atoms, and copolymers of a (meth)acrylic ester of an aromatic alcohol having 6 to 14 carbon atoms), and low-molecular weight adhesive resins having polymerizable unsaturated bonds.

### [Properties of Ink Composition for ink-jet recording]

Preferable properties of the ink composition for ink-jet recording according to the invention are herein explained. Considering the ejection efficiency when applied to inkjet recording, the ink composition for ink-jet recording according to the invention preferably has an ink viscosity of 7 to 30 mPa·s, more preferably 7 to 25 mPa·s, at the temperature at the time of ejection (e.g., a temperature in the range of 40 to 80 °C, more preferably in the range of 25 to 50 °C). The viscosity at room temperature (25 to 30°C) of the ink composition for ink-jet recording may be 10 to 50 mPa·s, preferably 12 to 40 mPa·s.

It is preferable to adjust and determine the properly of the ink composition for ink-jet recording according to the invention so that the viscosity falls in the range. By setting the viscosity at room temperature high, it become possible to prevent penetration of the ink into the recording medium even when a porous recording medium is used, to reduce the amount of uncured monomer and the odor, to suppress bleeding upon the deposition of ink droplets, and consequently to improve the image quality.

The surface tension of the ink composition for ink-jet recording according to the invention is preferably from 20 to 30 mN/m and more preferably from 23 to 28 mN/m. When the ink is used for recording on various recording media such as polyolefin, PET, coated paper, and non-coated paper, the surface tension is preferably 20 mN/m or more in view of the prevention of bleeding and penetration, and 30 mN/m or less in view of the wettability.

### [Inkjet Recording Method]

Hereinafter, the inkjet recording method according to the invention and inkjet recording apparatuses applicable thereto will be described.

The inkjet recording method according to the invention comprises (i-1) ejecting the ink composition as an ink for ink jet recording onto a recording medium and (i-2) curing the ejected ink composition for ink-jet recording by irradiation with actinic radiation rays. The inkjet recording method of the invention forms an image by curing the ink composition on the recording medium by including at least the above-described (i-1) and (i-2).

The (i-1) ejecting in the recording method of the invention may utilize the inkjet recording apparatus that is hereinafter explained in detail.

### -Inkjet Recording Apparatus-

The inkjet recording apparatus for use in the invention is not particularly limited, and may be selected from known available inkjet recording apparatuses with sufficient resolution to achieve purposes. That is, in the invention, the (i-1) ejecting of the ink composition on the recording media can be performed by any known inkjet recording apparatuses including commercially available ones.

Examples of usable inkjet recording apparatuses include an apparatus which has at least an ink-supplying system, a temperature sensor, and actinic radiation source.
The ink-supplying system includes, for example, a stock tank storing the inkjet recording ink according to the invention, a supply pipe, an ink-supplying tank immediately before inkjet head, a filter, and a piezoelectric inkjet head. The piezoelectric inkjet head can be operated such that the ejection is conducted at a resolution in a range of, for example, 320x320 to 4,000×4,000 dpi, preferably in a range of 400x400 to 1,600×1_{,}600 dpi, and more preferably in a range of 720x720 dpi, to form multi-sized dots in an amount in a range of 1 to 100 pi, which is preferably in a range of 8 to 30 pl. The unit "dpi" in the invention means the number of dots per 2.54 cm.

As described above, the temperature of the radiation-curable ink at the time of ejection is preferably maintained constant. Therefore, the region from the ink-supplying tank to the inkjet head is preferably thermally insulated and heated. The method of controlling the temperature is not particularly limited. In an embodiment, each piping unit is monitored by multiple temperature sensors and is heated to control the temperature adequately based on the flow rate of ink and the environmental temperature. The temperature sensors may be disposed in the ink-supplying tank and near the nozzles of the inkjet head. In addition, the head unit to be heated is preferably thermally shielded or insulated so as to minimize the environmental influence on the apparatus. It is preferable to insulate the head unit from other units and reduce the heat capacity of the entire unit to be heated in order to shorten the start-up time needed for heating or in order to reduce the loss in heat energy.

When the ink composition for ink-jet recording according to the invention is ejected onto the surface of the hydrophilic support, it is preferable to decrease the viscosity of the ink composition to 7 to 30 mPa·s (more preferably 7 to 25 mPa·s) by heating the ink composition to 40 to 80°C (more preferably 25 to 50 °C) before ejection. Especially as the ink composition for ink-jet recording according to the invention, it is preferable to use an ink composition whose ink viscosity at 25 °C is in the range of 35 to 500 mP·s, since significant effects are obtained. In this manner, it is possible to realize highly stable ejection.

Generally, radiation-curable ink compositions, such as the ink composition for ink-jet recording according to the invention, are usually more viscous than aqueous inks, and the fluctuation in the viscosity of radiation-curable ink compositions caused by the fluctuation in temperature during printing is larger. The fluctuation in the viscosity of ink composition exerts significant influences on the droplet size and the droplet ejection speed, causing deterioration in image quality, and thus, it is necessary to keep the temperature of the ink composition as constant as possible during printing. It is preferable to control the ink composition temperature within ±5°C from the set temperature, more preferably ±2°C from the set temperature, and still more preferably ±1°C from the set temperature.

The (i-2) curing the ejected ink composition by irradiation with actinic radiation rays in the recording method of the invention is hereinafter explained.
The ink composition ejected on the surface of a recording medium is cured by irradiation with actinic radiation. This is because the polymerization initiator contained in the ink composition according to the invention is decomposed by irradiation of actinic radiation so as to generate a polymerization starter such as a radical, and the function of the polymerization starter is exhibited so as to cause and promote radical polymerization of polymerizable compounds in the ink composition, which may further be copolymerized with the other additional polymerizable compound which are used in combination in accordance with necessity. In a case where a sensitizing dye coexists in the ink composition with the polymerization initiator, the sensitizing dye is excited to the excited state by absorption of actinic radiation, and then the polymerization initiator in the polymerization initiation system is promoted to decomposing upon contact with the sensitizing dye in the excited state, so as to achieve curing of the ink composition with high sensitivity.

Examples of the actinic radiation include α-rays, γ-rays, electron beams, X-rays, ultraviolet rays, visible rays, and infrared rays. Among them, electron beams, ultraviolet rays or visible rays are preferable as the actinic radiation The peak wavelength of the actinic radiation depends on the absorption characteristics of the sensitizing dye in the ink composition, and it may be, for example, in a range of 200 to 600 nm, preferably in a range of 300 to 450 nm, and more preferably in a range of 350 to 420 nm.

A polymerization initiating system provided in the invention is sufficiently sensitive to radiation even at a low output. Accordingly, output of the radiation may be, for example, an irradiation energy of 2,000 mJ/cm² or lower, preferably from 10 to 2,000 mJ/cm², more preferably from 20 to 1,000 mJ/cm², and still more preferably from 50 to 800 mJ/cm².
The actinic radiation may be irradiated such that the illuminance on the exposure plane is, for example, in a range of 10 to 2,000 mW/cm², and preferably in a range of 20 to 1,000 mW/cm².

Mercury lamps, gas or solid state lasers and the like are widely used as actinic radiation ray sources, and mercury lamps and metal halide lamps are widely used for UV-curing inkjet. However, under the current strong needs for the elimination of the use of mercury from the viewpoint of environmental protection, it is very important industrially and environmentally to replace mercury lamps with GaN-type semiconductor UV-emitting devices. In addition, LED's (UV-LED) and LD's (UV-LD) are smaller in size, longer in lifetime, higher in efficiency, and lower in cost, and thus, attracting attention as light sources for radiation-curing inkjet printers.

As described above, a light-emitting diode (LED) or a laser diode (LD) may be used as the actinic radiation ray source. An ultraviolet LED or an ultraviolet LD may be used when an ultraviolet ray source is required. For example, a purple LED having a main emission spectrum in the wavelength range of 365 to 420 nm is available from Nichia Corporation. As to a light having a still shorter wavelength, U.S. Patent No. 6,084,250 (the disclosure of which is incorporated herein by reference) discloses an LED having a main emission spectrum in the wavelength region of 300 to 370 nm. Other ultraviolet LED's are also commercially available, and capable of emitting radiations of different UV ranges. The radiation ray source used in the invention is preferably a UV-LED, and particularly preferably a UV-LED having a peak wavelength in the range of 350 to 420 nm.

The maximum illuminance of LED light on the image recording medium is preferably from 10 to 2000 mW/cm², more preferably from 20 to 1000 mW/cm², and still more preferably from 50 to 800 mW/cm².

The ink composition according to the invention may be irradiated with actinic radiation rays, for example, for 0.01 to 120 seconds, preferably for 0.1 to 90 seconds.
The irradiation condition and the basic irradiation method with the actinic radiation are disclosed in JP-A No. 60-132767. Specifically, the exposure is performed in a so-called shuttle process, i.e., by scanning with a head unit having an ink-ejecting device and light sources disposed at both sides of the head unit. The actinic radiation is irradiated a certain period (e.g., from 0.01 to 0.5 second, preferably from 0.01 to 0.3 second, and more preferably, from 0.01 to 0.15 second) after ink deposition. When the time between ink deposition and irradiation is very short, it is possible to prevent bleeding of the uncured ink deposited on the recording medium. Further, even when a porous recording medium is used, ink is exposed to radiation before penetrating deep into the recording medium where the radiation does not reach, whereby residual unreacted monomer is reduced to reduce odor.

The curing of the ink may be conducted with a light source that is not driven. WO 99/54415 Pamphlet discloses an irradiation method in which the recording area is irradiated with UV rays by using an optical fiber or by using a mirror disposed on a side wall of the head unit which mirror reflects the collimated light. Such curing methods may also be applied in the inkjet recording method of the invention.

By employing inkjet-recording methods such as described above, the dot diameter of the deposited ink can be maintained constant even when various recording media that are different in surface wettability is used, thus improving the image quality. In order to obtain a color image by the inkjet recording method according to the invention, it is preferable to form images by in an order in which a color having higher lightness overcoats another color(s) having lower lightness. When color inks are applied in that order, the radiation rays reaches inks located at the bottom; therefore, superior curing sensitivity, reduction in the amount of residual monomer and odor, and improvement in adhesiveness are achieved. Although it is possible to conduct the irradiation with radiation after a full-color image is formed, it is preferable to irradiate the image with radiation after each color ink is deposited, in view of the acceleration of curing.

Thus, an image with high precision and high strength can be recorded on the surface of a recording medium through highly sensitizing curing of the ink composition for inkjet-recording of the invention by irradiation of actinic radiation. Moreover, an image excellent in adhesiveness to a recording medium can be formed.
Furthermore, the ink composition for inkjet-recording of the invention is a suitable low viscosity composition, and a flexible curing film in the image formation can be obtained by using the ink composition.

### EXAMPLES

Hereinafter, the present invention is described in detail with reference to embodiments, while the present invention is by no means limited thereby. The embodiments described below relate to each of plural colors of inks for UV inkjet. "Parts" in the examples mean "parts by mass" unless otherwise stated.

### [Example 1]

The following components were stirred with a high speed stirring machine equipped with a water cooling system to obtain a cyan ink composition for UV inkjet.
(Cyan ink composition)
   • Specific cyclic amine compound [Listed compound (A-2): (A) component] 5.0 parts
   • Specific alicyclic monomer [Listed compound (B-27): B component] 30.0 parts
   • Tridecyl acrylate 11.0 parts (manufactured by Sartomer Inc., SR498E)
   • 2-Phenoxyethyl acrylate 23.4 parts (manufactured by Sartomer Inc., SR339)
   • Trimethylolpropane triacrylate 5.0 parts (manufactured by Sartomer Inc., SR351)
   • Solsperse 32000 0.4 part (manufactured by Noveon Inc., dispersing agent)
   • Irgalite Blue GLVO 3.6 parts (manufactured by Ciba Specialty Chemicals, Pigment: (D) component)
   • Genorad 16 0.05 part (manufactured by Rahn AG, polymerization inhibitor)
   • Rapi-Cure DVE-3 4.0 parts (manufactured by ISP Europe Ltd., vinylether compound)
   • Lucirin TPO 8.5 parts (manufactured by BASF AG, photoinitiator: (C) component)
   • Benzophenone (photoinitiator): (C) component) 4.0 parts
   • Irgacure 184 4.0 parts (manufactured by Ciba Specialty Chemicals, photoinitiator: (C) component)
   • Isopropylthioxanthone 1.0 part (manufactured by Ciba Specialty Chemicals, DAROCUR ITX)
   • Byk 307 0.05 part (manufactured by BYK Chemie GmbH, Antifoaming agent)

### (Evaluation of Ink)

The recording was performed on a sheet made from polyvinyl chloride using an inkjet-recording apparatus provided with the cyan ink composition obtained in Example 1 and a piezoelectric inkjet head (CA3 head manufactured by TOSHIBA TEC Corp.). The ink-supplying system includes a stock tank, a supply pipe, an ink-supplying tank immediately before the inkjet head, a filter, and a piezoelectric inkjet head, and the temperature control was performed in such a manner that the temperature at the nozzle portion should be always maintained at 45±3°C (100% coated image was printed). After ejecting the ink composition, the ink was cured by passing it under the irradiation of an iron-doped UV rays lamp (Power 120W/cm²) at the rate of 40 m/min, thereby to obtain a printed matter. At that time, the following evaluation was performed. The results are shown in Table 1.

### < Evaluation of Sensitivity for Curing>

Energy of exposure required for curing the ink composition was measured by a photo-amount integrating meter (trade name: UV POWERMAP^{™}, manufactured by EIT Inc.). As a value measured thereby is smaller, the ink composition is evaluated as higher in sensitivity for curing.
As a result of the above measuring, the cyan ink composition of Example 1 was observed to require an integrated amount of UV exposure is about 330 mJ/cm², thus it was confirmed that the cyan ink composition of Example 1 is cured with high sensitivity.

### < Evaluation of Curability>

A curability of the ink composition was evaluated by physically touching an image portion formed after curing the ink composition of the printed matter. Specifically, the curability is defined by the existence of adhesiveness on a surface of a cured film of the image portion. As a result of the above evaluation, the ink composition of Example 1 was observed as completely losing adhesiveness, thus it was confirmed that the ink composition of Example 1 is excellent in curability.

### <Evaluation of Adhesiveness to Recording material>

An adhesiveness of the ink composition to a recording material was evaluated by a cross hatch test in accordance with ISO 2409 (ASTM D 3359) and was classified according to the notation of 5B to 1B of the ASTM method. "5B" is the grade for being evaluated as having most excellent adhesiveness, while "3B" or higher grades are evaluated as having no practical problem. As a result of the above evaluation, the ink composition of Example 1 was observed as having high adhesiveness, and the grade thereof in the notation of the ASTM method was classified as 4B.

### <Evaluation of Flexibility>

An image was formed on a sheet by the cyan ink composition of Example 1, and after the sheet was bended for ten times, a flexibility of the ink composition was evaluated by observing a degree of cracks generated in a film of the cured image. The result of the bending test is classified into one of five grades, in which "5 points" is the grade for being evaluated as having no crack, while "3 points" or higher grades are evaluated as having no practical problem. As a result of the above evaluation, the ink composition of Example 1 was observed as having only a slight crack which does not affect the printed image, and the grade thereof in the above criteria was classified as 4 points.

### [Example 2]

The following components were stirred with a high speed stirring machine equipped with a water cooling system to obtain a magenta ink composition for UV inkjet.
(Magenta ink composition)
   • Specific cyclic amine compound [Listed compound (A-1): (A) component] 4.0 parts
   • Specific alicyclic monomer [Listed compound (B-21) : (B) component] 34.0 parts
   • Tridecyl acrylate 7.0 parts (manufactured by Sartomer Inc., SR498E)
   • 2-Phenoxyethyl acrylate 24.4 parts (manufactured by Sartomer Inc., SR339)
   • Trimethylolpropane triacrylate 5.0 parts (manufactured by Sartomer Inc., SR351)
   • Solsperse 32000 0.4 part (manufactured by Noveon Inc., dispersing agent)
   • Cinquasia Mazenta RT-355D 3.6 parts (manufactured by Ciba Specialty Chemicals, Pigment: (D) component)
   • Genorad 16 0.05 part (manufactured by Rahn AG, polymerization inhibitor)
   • Rapi-Cure DVE-3 4.0 parts (manufactured by ISP Europe Ltd., vinyl ether compound)
   • Lucirin TPO (manufactured by BASF AG, photoinitiator: (C) component) 8.5 parts
   • Benzophenone (photoinitiator: (C) component) 3.0 parts
   • Irgacure 184 4.0 parts (manufactured by Ciba Specialty Chemicals, photoinitiator: (C) component)
   • Irgacure 369 1.0 part (manufactured by Ciba Specialty Chemicals, photoinitiator: (C) component)
   • Isopropylthioxanthone 1.0 part (manufactured by Ciba Specialty Chemicals, DAROCUR ITX)
   • Byk 307 0.05 part (manufactured by BYK Chemie GmbH, antifoaming agent)

The resultant magenta ink composition of Example 2 was ejected onto a sheet made from polyvinyl chloride in a manner similar to Example 1, so that curing of the composition was achieved. In the same manner as in Example 1, evaluation was performed on sensitivity for curing, curability, adhesiveness, and flexibility of the composition. The results are shown in Table 1 below.

### [Example 3]

The following components were stirred with a high speed stirring machine equipped with a water cooling system to obtain a yellow ink composition for UV inkjet.
(Yellow ink composition)
   • Specific cyclic amine compound [Listed compound (A-22): (A) component] 3.0 parts
   • Specific alicyclic monomer [Listed compound (B-21): (B) component] 34.0 parts
   • 2-Phenoxyethyl acrylate 32.4 parts (manufactured by Sartomer Inc., SR339)
   • Trimethylolpropane triacrylate 2.0 parts (manufactured by Sartomer Inc., SR351)
   • Dipropylene glycol diacrylate 3.0 parts (manufactured by Sartomer Inc., SR508)
   • Solsperse 32000 0.4 part (manufactured by Noveon Inc., dispersing agent)
   • Cromophtal Yellow LA 3.6 parts (manufactured by Ciba Specialty Chemicals, pigment: (D) component)
   • Genorad 16 0.05 part (manufactured by Rahn AG, polymerization inhibitor)
   • Rapi-Cure DVE-3 2.0 parts (manufactured by ISP Europe Ltd., vinyl ether compound)
   • Lucirin TPO 6.5 parts (manufactured by BASF AG, photoinitiator: (C) component)
   • Benzophenone (photoinitiator: (C) component) 4.0 parts
   • Irgacure 184 4.0 parts (manufactured by Ciba Specialty Chemicals, photoinitiator: (C) component)
   • Irgacure 819 2.0 parts (manufactured by Ciba Specialty Chemicals, photoinitiator: (C) component)
   • Isopropylthioxanthone 1.0 part (manufactured by Ciba Specialty Chemicals, DAROCUR ITX)
   • Byk 307 0.05 part (manufactured by BYK Chemie GmbH, antifoaming agent)

The resultant yellow ink composition of Example 3 was ejected onto a sheet made from polyvinyl chloride in a manner similar to Example 1, so that curing of the composition was achieved. In the same manner as in Example 1, evaluation was performed on sensitivity for curing, curability, adhesiveness, and flexibility of the composition. The results are shown in Table 1 below.

### [Example 4]

The following components were stirred with a high speed stirring machine equipped with a water cooling system to obtain a black ink composition for UV inkjet.
(Black ink composition)
   - Specific cyclic amine compound [Listed compound (A-2):(A) component] 7.0 parts
   - Specific alicyclic monomer [Listed compound (B-21):(B) component] 18.0 parts
   - Specific alicyclic monomer [Listed compound (B-29):(B) component] 21.0 parts
   - 2-Phenoxyethyl acrylate 22.4 parts (manufactured by Sartomer Inc., SR339)
   - Trimethylolpropane triacrylate 6.0 parts (manufactured by Sartomer Inc., SR351)
   - Solsperse 32000 0.4 part (manufactured by Noveon Inc., dispersing agent)
   - Microlith Black C-K 2.6 parts (manufactured by Ciba Specialty Chemicals, Pigment: (D) component)
   - Genorad 16 0.05 part (manufactured by Rahn AG, polymerization inhibitor)
   - Lucirin TPO 8.5 parts (manufactured by BASF AG, photoinitiator: (C) component)
   - Benzophenone (photoinitiator: (C) component) 4.0 parts
   - Irgacure 184 4.5 parts (manufactured by Ciba Specialty Chemicals, photoinitiator: (C) component)
   - Isopropylthioxanthone 0.5 part (manufactured by Ciba Specialty Chemicals, DAROCUR ITX)
   - Byk 307 0.05 part (manufactured by BYK Chemie GmbH, antifoaming agent)

The resultant black ink composition of Example 4 was ejected onto a sheet made from polyvinyl chloride in a manner similar to Example 1, so that curing of the composition was achieved. In the same manner as in Example 1, evaluation was performed on sensitivity for curing, curability, adhesiveness, and flexibility of the composition. The results are shown in Table 1 below.

### [Example 5]

The following components were stirred with a high speed stirring machine equipped with a water cooling system to obtain a cyan ink composition for UV inkjet.
(Cyan ink composition)
   - Specific cyclic amine compound [Listed compound (A-2):(A) component] 7.0 parts
   - Specific alicyclic monomer [Listed compound (B-30):(B) component] 25.0 parts
   - 2-Phenoxyethyl acrylate 38.4 parts (manufactured by Sartomer Inc., SR339)
   - Trimethylolpropane triacrylate 2.0 parts (manufactured by Sartomer Inc., SR351)
   - Dipropylene glycol diacrylate 2.0 parts (manufactured by Sartomer Inc., SR508)
   - Solsperse 32000 0.4 part (manufactured by Noveon Inc., dispersing agent)
   - Irgalite Blue GLVO 3.6 parts (manufactured by Ciba Specialty Chemicals, pigment: (D) component)
   - Genorad 16 0.05 part (manufactured by Rahn AG, polymerization inhibitor)
   - Rapi-Cure DVE-3 2.0 parts (manufactured by ISP Europe Ltd., vinyl ether compound)
   - Lucirin TPO 8.5 parts (manufactured by BASF AG, photoinitiator: (C) component)
   - Benzophenone (photoinitiator: (C) component) 4.0 parts
   - Irgacure 184 4.0 parts (manufactured by Ciba Specialty Chemicals, photoinitiator: (C) component)
   - Isopropylthioxanthone 1.0 part (manufactured by Ciba Specialty Chemicals, DAROCUR ITX)
   - Byk 307 0.05 part (manufactured by BYK Chemie GmbH, antifoaming agent)

The resultant cyan ink composition of Example 5 was ejected onto a sheet made from polyvinyl chloride in a manner similar to Example 1, so that curing of the composition was achieved. In the same manner as in Example 1, evaluation was performed on sensitivity for curing, curability, adhesiveness, and flexibility of the composition. The results are shown in Table 1 below.

### [Example 6]

The following components were stirred with a high speed stirring machine equipped with a water cooling system to obtain a white ink composition for UV inkjet.
(White ink composition)
   - Specific cyclic amine compound [Listed compound (A-2): (A) component] 5.0 parts
   - Specific alicyclic monomer [Listed compound (B-30): (B) component] 25.0 parts
   - Phenoxyethyl acrylate 29.0 parts
   - Trimethylolpropane triacrylate 1.9 parts (manufactured by Sartomer Inc., SR351)
   - Solsperse 36000 2.5 parts (manufactured by Noveon Inc., dispersing agent)
   - MICROLITH WHITE R-A 16.0 parts (manufactured by Ciba Specialty Chemicals, Pigment: (D) component)
   - Genorad 16 0.05 part (manufactured by Rahn AG, polymerization inhibitor)
   - Rapi-Cure DVE-3 8.0 parts (manufactured by ISP Europe Ltd., vinyl ether compound)
   - Irgacure 369 1.0 parts (manufactured by Ciba Specialty Chemicals, photoinitiator: (C) component)
   - Irgacure 819 7.5 parts (manufactured by Ciba Specialty Chemicals, pigment: (C) component)
   - Irgacure 2959 4.0 parts (manufactured by Ciba Specialty Chemicals, pigment: (C) component)
   - Byk 307 0.05 part (manufactured by BYK Chemie GmbH, antifoaming agent)

The resultant white ink composition of Example 6 was ejected onto a sheet made from polyvinyl chloride in a manner similar to Example 1, so that curing of the composition was achieved. In the same manner as in Example 1, evaluation was performed on sensitivity for curing, curability, adhesiveness, and flexibility of the composition. The results are shown in Table 1 below.

### [Comparative Example 1]

The following components were stirred with a high speed stirring machine equipped with a water cooling system to obtain a cyan ink composition for UV inkjet.
(Cyan ink composition)
   - Specific alicyclic monomer [Listed compound (B-27): (B) component] 30.0 parts
   - Tridecyl acrylate 16.0 parts (manufactured by Sartomer Inc., SR498E)
   - 2-Phenoxyethyl acrylate 23.4 parts (manufactured by Sartomer Inc., SR339)
   - Trimethylolpropane triacrylate 5.0 parts (manufactured by Sartomer Inc., SR351)
   - Solsperse 32000 0.4 part (manufactured by Noveon Inc., dispersing agent)
   - Irgalite Blue GLVO 3.6 parts (manufactured by Ciba Specialty Chemicals, pigment: (D) component)
   - Genorad 16 0.05 part (manufactured by Rahn AG, polymerization inhibitor)
   - Rapi-Cure DVE-3 4.0 parts (manufactured by ISP Europe Ltd., vinyl ether compound)
   - Lucirin TPO 8.5 parts (manufactured by BASF AG, photoinitiator: (C) component)
   - Benzophenone (photoinitiator: (C) component) 4.0 parts
   - Irgacure 184 4.0 parts (manufactured by Ciba Specialty Chemicals, photoinitiator: (C) component)
   - Isopropylthioxanthone 1.0 part (manufactured by Ciba Specialty Chemicals, DAROCUR ITX)
   - Byk 307 0.05 part (manufactured by BYK Chemie GmbH, antifoaming agent)

The resultant cyan ink composition of Comparative Example 1 was ejected onto a sheet made from polyvinyl chloride in a manner similar to Example 1, so that curing of the composition was achieved. In the same manner as in Example 1, evaluation was performed on sensitivity for curing, durability, adhesiveness, and flexibility of the composition. The results are shown in Table 1 below.

[Comparative Example 2]The following components were stirred with a high speed stirring machine equipped with a water cooling system to obtain a cyan ink composition for UV inkjet.
(Cyan ink composition)
   - Specific cyclic amine compound [Listed compound (A-2):(A) component] 5.0 parts
   - Tridecyl acrylate 24.0 parts (manufactured by Sartomer Inc., SR498E)
   - 2-Phenoxyethyl acrylate 35.4 parts (manufactured by Sartomer Inc., SR339)
   - Trimethylolpropane triacrylate 10.0 parts (manufactured by Sartomer Inc., SR351)
   - Solsperse 32000 0.4 part (manufactured by Noveon Inc., dispersing agent)
   - Irgalite Blue GLVO 3.6 parts (manufactured by Ciba Specialty Chemicals, pigment: (D) component)
   - Genorad 16 0.05 part (manufactured by Rahn AG, polymerization inhibitor)
   - Rapi-Cure DVE-3 4.0 parts (manufactured by ISP Europe Ltd., vinyl ether compound)
   - Lucirin TPO 8.5 parts (manufactured by BASF AG, photoinitiator:(C) component)
   - Benzophenone (photoinitiator: (C) component) 4.0 parts
   - Irgacure 184 4.0 parts (manufactured by Ciba Specialty Chemicals, photoinitiator: (C) component)
   - Isopropylthioxanthone 1.0 part (manufactured by Ciba Specialty Chemicals, DAROCUR ITX)
   - Byk 307 0.05 part (manufactured by BYK Chemie GmbH, antifoaming agent)

The resultant cyan ink composition of Comparative Example 2 was ejected onto a sheet made from polyvinyl chloride in a manner similar to Example 1, so that curing of the composition was achieved. In the same manner as in Example 1, evaluation was performed on sensitivity for curing, curability, adhesiveness, and flexibility of the composition. The results are shown in Table 1 below.

### [Comparative Example 3]

The following components were stirred with a high speed stirring machine equipped with a water cooling system to obtain a cyan ink composition for UV inkjet.
(Cyan ink composition)
   - Specific alicyclic monomer [Listed compound (B-27): (B) component] 30.0 parts
   - N-Vinylcaprolactam 5.0 parts
   - Tridecyl acrylate 11.0 parts (manufactured by Sartomer Inc., SR498E)
   - 2-Phenoxyethyl acrylate 23.4 parts (manufactured by Sartomer Inc., SR339)
   - Trimethylolpropane triacrylate 5.0 parts (manufactured by Sartomer Inc., SR351)
   - Solsperse 32000 0.4 part (manufactured by Noveon Inc., dispersing agent)
   - Irgalite Blue GLVO 3.6 parts (manufactured by Ciba Specialty Chemicals, pigment: (D) component)
   - Genorad 16 0.05 part (manufactured by Rahn AG, polymerization inhibitor)
   - Rapi-Cure DVE-3 4.0 parts (manufactured by ISP Europe Ltd., vinyl ether compound)
   - Lucirin TPO 8.5 parts (manufactured by BASF AG, photoinitiator: (C) component)
   - Benzophenone (photoinitiator: (C) component) 4.0 parts
   - Irgacure 184 4.0 parts (manufactured by Ciba Specialty Chemicals, photoinitiator: (C) component)
   - Isopropylthioxanthone 1.0 part (manufactured by Ciba Specialty Chemicals, DAROCUR ITX)
   - Byk 307 0.05 part (manufactured by BYK Chemie GmbH, antifoaming agent)

The resultant cyan ink composition of Comparative Example 3 was ejected onto a sheet made from polyvinyl chloride in a manner similar to Example 1, so that curing of the composition was achieved. In the same manner as in Example 1, evaluation was performed on sensitivity for curing, curability, adhesiveness, and flexibility of the composition. The results are shown in Table 1 below.

**Table 1**

| | Integrated light exposure (mJ/cm²) | Curability | Adhesiveness | Flexibility |
|---|---|---|---|---|
| Example 1 | 330 | Good | 3B | 4 |
| Example 2 | 330 | Good | 3B | 4 |
| Example 3 | 330 | Good | 4B | 5 |
| Example 4 | 330 | Good | 5B | 4 |
| Example 5 | 330 | Good | 5B | 5 |
| Example 6 | 330 | Good | 5B | 4 |
| Comparative example 1 | 330 | Not cured | - | - |
| Comparative example 2 | 330 | Sticky | 2B | 2 |
| Comparative example 3 | 330 | Sticky | 3B | 4 |

As apparent from Table 1, any one of the ink compositions of Examples 1 to 6 was cured with high sensitivity and was found to be excellent in all the evaluation items including curability of the image portion, adhesiveness to a recording medium, and flexibility.
On the other hand, the ink composition of Comparative Example 1 not using a specific cyclic amine compound but using only an alicyclic monomer was not cured under the condition of integrated light exposure of 330mJ/cm², which turns out that its sensitivity is inferior.
In addition, the ink composition of Comparative Example 2 not using a specific alicyclic monomer but using a specific cyclic amine compound in an amount of 5% by weight was inferior in any of its curability, adhesiveness, and flexibility.
Furthermore, the ink composition of Comparative Example 3 prepared in a manner similar to Example 1 except that N-vinylcaprolactam was used in place of the specific cyclic amine compound showed adhesiveness and flexibility of each of which level was no problem in its practical use, but its curability was poor.

### [Example 7] (Reference)

The following components were stirred with a high speed stirring machine equipped with a water cooling system to obtain a cyan ink composition for UV inkjet.
(Cyan ink composition)
   - Specific cyclic amine compound [Listed compound (A-1):(A) component] 12.0 parts
   - Tridecyl acrylate 11.0 parts (manufactured by Sartomer Inc., SR498E)
   - 2-Phenoxyethyl acrylate 23.4 parts (manufactured by Sartomer Inc., SR339)
   - N-Vinylcaprolactam 13.0 parts
   - Trimethylolpropane triacrylate 8.0 parts (manufactured by Sartomer Inc., SR351)
   - Solsperse 32000 0.4 part (manufactured by Noveon Inc., dispersing agent)
   - Irgalite Blue GLVO 3.6 parts (manufactured by Ciba Specialty Chemicals, (D) component)
   - Genorad 16 0.05 part (manufactured by Rahn AG, polymerization inhibitor)
   - Rapi-Cure DVE-3- 4.0 parts (manufactured by ISP Europe Ltd., vinyl ether compound)
   - Lucirin TPO 8.5 parts (manufactured by BASF AG, photoinitiator: (C) component)
   - Benzophenone (photoinitiator: (C) component) 4.0 parts
   - Irgacure 184 4.0 parts (manufactured by Ciba Specialty Chemicals, photoinitiator: (C) component)
   - Byk 307 0.05 part (manufactured by BYK Chemie GmbH, antifoaming agent)

The resultant cyan ink composition of Example 1 was ejected onto a sheet made from polyvinyl chloride in a manner similar to Example 1, so that curing of the composition was achieved.The printed matter using this ink was similarly estimated as in Example 1. The results are shown in Table 2 below.

### [Example 8] (Reference)

- Specific cyclic amine compound [listed compound (A-1): (A) component] 20.0 parts
- N-Vinylcaprolactam 15.0 parts
- 2-Phenoxyethyl acrylate 26.4 parts (manufactured by Sartomer Inc., SR339)
- Trimethylolpropane triacrylate 5.0 parts (manufactured by Sartomer Inc., SR351)
- Solsperse 32000 (manufactured by Noveon Inc., dispersing agent) 0.4 part
- Cinquasia Mazenta RT-355D [(D) component] 3.6 parts (manufactured by Ciba Specialty Chemicals, pigment)
- Genorad 16 0.05 part (manufactured by Rahn AG, polymerization inhibitor)
- Rapi-Cure DVE-3 4.0 parts (manufactured by ISP Europe Ltd., vinyl ether compound)
- Lucirin TPO 8.5 parts (manufactured by BASF AG, photoinitiator: (C) component)
- Benzophenone (photoinitiator: (C) component) 4.0 parts
- Irgacure 184 4.0 parts (manufactured by Ciba Specialty Chemicals, photoinitiator: (C) component)
- Isopropylthioxanthone (ITX) 1.0 part
- Byk 307 0.05 part (manufactured by BYK Chemie GmbH, antifoaming agent)

The resultant magenta ink was ejected onto a sheet made from polyvinyl chloride in a manner similar to Example 1, so that curing of the composition was achieved. The printed matter using this ink was similarly estimated as in Example 1. The results are shown in Table 2 below.

### [Example 9] (Reference)

The following components were stirred with a high speed stirring machine equipped with a water cooling system to obtain a yellow ink composition for UV inkjet.
(Yellow ink composition)
   - Specific cyclic amine compound [Listed compound (A-1):(A) component] 18.0 parts
   - Specific cyclic amine compound [Listed compound (A-14): (A) component] 4.0 parts
   - N-Vinylcaprolactam 16.0 parts
   - 2-Phenoxyethyl acrylate 21.4 parts (manufactured by Sartomer Inc., SR339)
   - Trimethylolpropane triacrylate 3.0 parts (manufactured by Sartomer Inc., SR351)
   - Dipropylene glycol diacrylate 1.0 parts (manufactured by Sartomer Inc., SR508)
   - Solsperse 32000 0.4 part (manufactured by Noveon Inc., dispersing agent)
   - Cromophtal Yellow LA, (D) component 3.6 parts (manufactured by Ciba Specialty Chemicals, pigment)
   - Genorad 16 0.05 part (manufactured by Rahn AG, polymerization inhibitor)
   - Rapi-Cure DVE-3 2.0 parts (manufactured by ISP Europe Ltd., vinyl ether compound)
   - Lucirin TPO 8.5 parts (manufactured by BASF AG, photoinitiator:(C) component)
   - Benzophenone (photoinitiator: (C) component 4.0 parts
   - Irgacure 184 4.0 parts (manufactured by Ciba Specialty Chemicals, photoinitiator: (C) component)
   - Isopropylthioxanthone (ITX) 1.0 part
   - Byk 307 0.05 part (manufactured by BYK Chemie GmbH, antifoaming agent)

The resultant yellow ink was ejected onto a sheet made from polyvinyl chloride in a manner similar to Example 1, so that curing of the composition was achieved. The printed matter using this ink was similarly estimated as in Example 1. The results are shown in Table 2 below.

### [Example 10] (Reference)

The following components were stirred with a high speed stirring machine equipped with a water cooling system to obtain a black ink composition for UV inkjet.
(Black ink composition)
   - Specific cyclic amine compound [Listed compound (A-2): (A) component] 20.0 parts
   - Isobornyl acrylate 17.0 parts (manufactured by Sartomer Inc., SR506D)
   - 2-Phenoxyethyl acrylate 28.4 parts (manufactured by Sartomer Inc., SR339)
   - Trimethylolpropane triacrylate 6.0 parts (manufactured by Sartomer Inc., SR351)
   - Solsperse 32000 0.4 part (manufactured by Noveon Inc., dispersing agent)
   - Microlith Black C-K, [(D) component] 2.6 parts (manufactured by Ciba Specialty Chemicals, pigment:)
   - Genorad 16 0.05 part (manufactured by Rahn AG, polymerization inhibitor)
   - Lucirin TPO 8.5 parts (manufactured by BASF AG, photoinitiator: (C) component)
   - Benzophenone (photoinitiator: (C) component) 4.0 parts
   - Irgacure 184 4.0 parts (manufactured by Ciba Specialty Chemicals, photoinitiator: (C) component)
   - Isopropylthioxanthone (ITX) 1.0 part
   - Byk 307 0.05 part (manufactured by BYK Chemie GmbH, antifoaming agent)

The resultant black ink was ejected onto a sheet made from polyvinyl chloride in a manner similar to Example 1, so that curing of the composition was achieved. The printed matter using this ink was similarly estimated as in Example 1. The results are shown in Table 2 below.

### [Example 11] (Reference)

The following components were stirred with a high speed stirring machine equipped with a water cooling system to obtain a cyan ink composition for UV inkjet.
(Cyan ink composition)
   - Specific cyclic amine compound [Listed compound (A-12):(A) component] 26.0 parts
   - 2-Phenoxyethyl acrylate 38.4 parts (manufactured by Sartomer Inc., SR339)
   - Trimethylolpropane triacrylate 2.0 parts (manufactured by Sartomer Inc., SR351)
   - Dipropylene glycol diacrylate 2.0 parts (manufactured by Sartomer Inc., SR508)
   - Solsperse 32000 0.4 part (manufactured by Noveon Inc., dispersing agent)
   - Irgalite Blue GLVO [(D) component] 3.6 parts (manufactured by Ciba Specialty Chemicals, pigment)
   - Genorad 16 0.05 part (manufactured by Rahn AG, polymerization inhibitor)
   - Rapi-Cure DVE-3 2.0 parts (manufactured by ISP Europe Ltd., vinyl ether compound)
   - Lucirin TPO 8.5 parts (manufactured by BASF AG, photoinitiator:(C) component)
   - Benzophenone (photoinitiator: (C) component) 4.0 parts
   - Irgacure 184 4.0 parts (manufactured by Ciba Specialty Chemicals, photoinitiator: (C) component) 4.0 parts
   - Isopropylthioxanthone (ITX) 1.0 part
   - Byk 307 0.05 part (manufactured by BYK Chemie GmbH, antifoaming agent)

The resultant cyan ink was ejected onto a sheet made from polyvinyl chloride in a manner similar to Example 1, so that curing of the composition was achieved. The printed matter using this ink was similarly estimated as in Example 1. The results are shown in Table 2 below:

### [Comparative Example 4]

The following components were stirred with a high speed stirring machine equipped with a water cooling system to obtain a cyan ink composition for UV inkjet.
(Cyan ink composition)
   - Specific cyclic amine compound [Listed compound (A-1):(A) component] 9.0 parts
   - Tridecyl acrylate 14.0 parts (manufactured by Sartomer Inc., SR498E)
   - 2-Phenoxyethyl acrylate 23.4 parts (manufactured by Sartomer Inc., SR339)
   - N-vinylcaprolactam 13.0 parts
   - Trimethylolpropane triacrylate 8.0 parts • (manufactured by Sartomer Inc., SR351)
   - Solsperse 32000 0.4 part (manufactured by Noveon Inc., dispersing agent)
   - Irgalite Blue GLVO 3.6 parts (manufactured by Ciba Specialty Chemicals, pigment)
   - Genorad 16 0.05 part (manufactured by Rahn AG, polymerization inhibitor)
   - Rapi-Cure DVE-3 4.0 parts (manufactured by ISP Europe Ltd., vinyl ether compound)
   - Lucirin TPO 8.5 parts (manufactured by BASF AG, photoinitiator:(C) component)
   - Benzophenone (photoinitiator: (C) component) 4.0 parts
   - Irgacure 184 4.0 parts (manufactured by Ciba Specialty Chemicals, photoinitiator: (C) component)
   - Byk 307 0.05 part (manufactured by BYK Chemie GmbH, antifoaming agent)

The resultant cyan ink was ejected onto a sheet made from polyvinyl chloride in a manner similar to Example 1, so that curing of the composition was achieved. The printed matter using this ink was similarly estimated as in Example 1. The results are shown in Table 2 below.

### [Comparative Example 5]

The following components were stirred with a high speed stirring machine equipped with a water cooling system to obtain a cyan ink composition for UV inkjet.
(Cyan ink composition)
   - Specific cyclic amine compound [Listed compound (A-1):(A) component] 3.0 parts
   - Tridecyl acrylate 20.0 parts (manufactured by Sartomer Inc., SR498E)
   - 2-Phenoxyethyl acrylate 23.4 parts (manufactured by Sartomer Inc., SR339)
   - N-Vinylcaprolactam 13.0 parts
   - Trimethylolpropane triacrylate 8.0 parts (manufactured by Sartomer Inc., SR351)
   - Solsperse 32000 0.4 part (manufactured by Noveon Inc., dispersing agent)
   - Irgalite Blue GLVO [(D) component] 3.6 parts (manufactured by Ciba Specialty Chemicals, pigment)
   - Genorad 16 0.05 part (manufactured by Rahn AG, polymerization inhibitor)
   - Rapi-Cure DVE-3 4.0 parts (manufactured by ISP Europe Ltd., vinyl ether compound)
   - Lucirin TPO 8.5 parts (manufactured by BASF AG, photoinitiator: (C) component)
   - Benzophenone (photoinitiator: (C) component) 4.0 parts
   - Irgacure 184 4.0 parts (manufactured by Ciba Specialty Chemicals, photoinitiator: (C) component) 0.05 part
   - Byk 307 0.05 part (manufactured by BYK Chemie GmbH, antifoaming agent)

The resultant cyan ink was ejected onto a sheet made from polyvinyl chloride in a manner similar to Example 1, so that curing of the composition was achieved. The printed matter using this ink was similarly estimated as in Example 1. The results are shown in Table 2 below.

### [Comparative Example 6]

The following components were stirred with a high speed stirring machine equipped with a water cooling system to obtain a black ink composition for UV inkjet.
(Black ink composition)
   - Specific cyclic amine compound [Listed compound (A-2):(A) component] 55.0 parts
   - Isobornyl acrylate 7.0 parts (manufactured by Sartomer Inc., SR506D)
   - 2-Phenoxyethyl acrylate 3.4 parts (manufactured by Sartomer Inc., SR339)
   - Trimethylolpropane triacrylate 6.0 parts (manufactured by Sartomer Inc., SR351)
   - Solsperse 32000 0.4 part (manufactured by Noveon Inc., dispersing agent)
   - Microlith Black C-K, [(D) component] 2.6 parts (manufactured by Ciba Specialty Chemicals, pigment:)
   - Genorad 16 0.05 part (manufactured by Rahn AG, polymerization inhibitor)
   - Lucirin TPO 8.5 parts (manufactured by BASF AG, photoinitiator: (C) component)
   - Benzophenone (photoinitiator: (C) component) 4.0 parts
   - Irgacure 184 4.0 parts (manufactured by Ciba Specialty Chemicals, photoinitiator: (C) component)
   - Isopropylthioxanthone (ITX) 1.0 part
   - Byk 307 0.05 part (manufactured by BYK Chemie GmbH, antifoaming agent)

The resultant black ink was ejected onto a sheet made from polyvinyl chloride in a manner similar to Example 1, so that curing of the composition was achieved. The printed matter using this ink was similarly estimated as in Example 1. The results are shown in Table 2 below.

### [Comparative Example 7]

The following components were stirred with a high speed stirring machine equipped with a water cooling system to obtain a cyan ink composition for UV inkjet.
(Cyan ink composition)
   - Comparative compound A described below 26.0 parts (FANCRYL FA-712HM manufactured by Hitachi Chemical Co., Ltd.)
   - 2-Phenoxyethyl acrylate 38.4 parts (manufactured by Sartomer Inc., SR339)
   - Trimethylolpropane triacrylate 2.0 parts (manufactured by Sartomer Inc., SR351)
   - Dipropylene glylcol diacrylate 2.0 parts (manufactured by Sartomer Inc., SR508)
   - Solsperse 32000 0.4 part (manufactured by Noveon Inc., dispersing agent)
   - Irgalite Blue GLVO [(D) component] 3.6 parts (manufactured by Ciba Specialty Chemicals, pigment)
   - Genorad 16 0.05 part (manufactured by Rahn AG, polymerization inhibitor)
   - Rapi-Cure DVE-3 2.0 parts (manufactured by ISP Europe Ltd., vinyl ether compound)
   - Lucirin TPO 8.5 parts (manufactured by BASF AG, photoinitiator:(C) component)
   - Benzophenone (photoinitiator: (C) component) 4.0 parts
   - Irgacure 184 4.0 parts
   - Isopropylthioxanthone (ITX) 1.0 part
   - Byk 307 0.05 part (manufactured by BYK Chemie GmbH, Antifoaming agent)

The resultant cyan ink was ejected onto a sheet made from polyvinyl chloride in a manner similar to Example 1, so that curing of the composition was achieved. The printed matter using this ink was similarly estimated as in Example 1. The results are shown in Table 2 below.

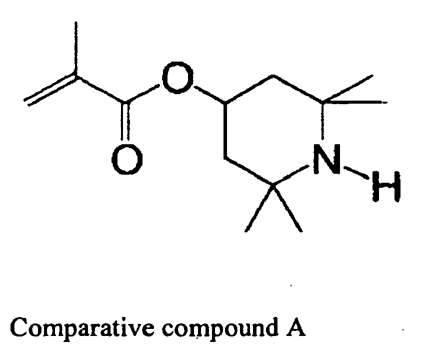

### [Comparative Example 8]

The following components were stirred with a high speed stirring machine equipped with a water cooling system to obtain a cyan ink composition for UV inkjet.
(Cyan ink composition)
   - Comparative compound B described below 26.0 parts (TINUVIN 292 manufactured by Ciba Specialty Chemicals)
   - 2-Phenoxyethyl acrylate 38.4 parts (manufactured by Sartomer Inc., SR339)
   - Trimethylolpropane triacrylate 2.0 parts (manufactured by Sartomer Inc., SR351)
   - Dipropyleneglylcol diacrylate 2.0 parts (manufactured by Sartomer Inc., SR508)
   - Solsperse 32000 0.4 part (manufactured by Noveon Inc., dispersing agent)
   - Irgalite Blue GLVO [(D) component] 3.6 parts (manufactured by Ciba Specialty Chemicals, pigment)
   - Genorad 16 0.05 part (manufactured by Rahn AG, polymerization inhibitor)
   - Rapi-Cure DVE-3 2.0 parts (manufactured by ISP Europe Ltd., vinyl ether compound)
   - Lucirin TPO (manufactured by BASF AG, photoinitiator:(C) component) 8.5 parts
   - Benzophenone (photoinitiator: (C) component) 4.0 parts
   - Irgacure 184 4.0 parts (manufactured by Ciba Specialty Chemicals, photoinitiator: (C) component)
   - Isopropylthioxanthone (ITX) 1.0 part
   - Byk 307 0.05 part (manufactured by BYK Chemie GmbH, antifoaming agent)

The resultant cyan ink was ejected onto a sheet made from polyvinyl chloride in a manner similar to Example 1, so that curing of the composition was achieved. The printed matter using this ink was similarly estimated as in Example 1. The results are shown in Table 2 below.

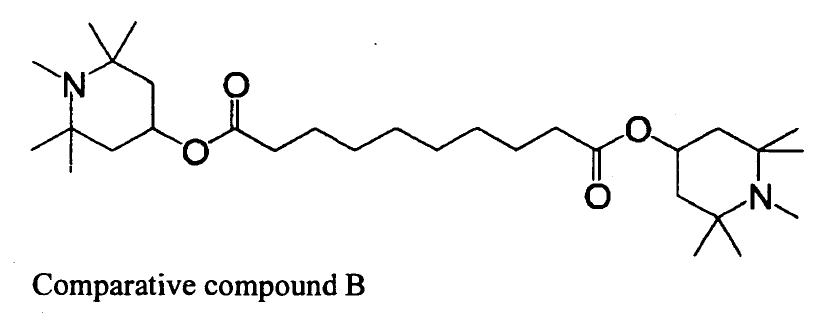

**Table 2**

| | (A) Specific polymerizable compound [(Content (Parts)] | Curability | Adhesiveness | Flexibility |
|---|---|---|---|---|
| Example 7 | (A-1) [12.0] | Good | 4B | 4 |
| Example 8 | (A-1) 120.0] | Good | 4B | 5 |
| Example 9 | (A-1)[18.0] (A-14)(4.0] | Good | 4B | 5 |
| Example 10 | (A-2) [20.0] | Good | 3B | 4 |
| Example 11 | (A-12) [26.0] | Good | 5B | 5 |
| Comparative example 4 | (A-1) [9.0] | Sticky | 3B | 4 |
| Comparative example 5 | (A-1) [3.0] | Not cured | - | - |
| Comparative example 6 | (A-1) [55.0] | Good | 2B | 4 |
| Comparative example 7 | (Comparative compound A) [26.0] | Sticky | 2B | 4 |
| Comparative example 8 | (Comparative compound B) [26.0] | Not cured | - | - |

As apparent from Table 2, the ink compositions of Examples 7 to 11 are each cured with high sensitivity, and they are excellent in all the evaluation items such as curability of image portion, adhesiveness to a recording medium, and flexibility of formed images, and each of the levels was of no problem in its practical use.
Among them, when a compound where a partial structure represented by the formula (1) and a polymerizable double bond are bonded together via a connecting group having an ether bond (-O-) is used as the (A) a specific cyclic amine compound, both of the adhesiveness and flexibility are found to be excellent. In addition, when Example 7 and Example 8 are compared, a compound when R⁶ is a hydrogen atom in the compound represented by Formula (2) is found to show a more excellent effect.

On the other hand, even if (A) a specific cyclic amine compound (listed compound as A-1) of the ink composition of Example 7 was used, the ink composition of Comparative Example 4 which is not fallen within the scope of the invention in regard to the content of the compound A-1 showed stickiness on the surface of a film, and such a composition was inferior in curability.
Also, since the ink composition of Comparative Example 5 with still less content of the (A) component was not cured under the same conditions of light exposure, it was not able to evaluate the cured film. In Comparative Example 3 where the content of the (A) component is too much, its adhesiveness was poor though its curability was good.

Moreover, in Comparative Example 7 wherein a compound when R¹ is a hydrogen atom in the partial structure represented by Formula (1) was added as an amine compound, the curability of the formed film was inadequate, so that the surface was sticky and the adhesiveness was poor. Also, in Comparative Example 8 using the compound which has two of the same partial structures as in Comparative Example 7 in the molecule, curing did not occur under the same conditions of exposure, and thus, it was not able to evaluate the cured film.

The invention provides an ink composition for inkjet-recording and a method for the inkjet-recording. According to the invention, an ink composition for inkjet-recording, which shows a high sensitivity to the irradiation with actinic radiation and is able to form an image with superior curability, permitting the image formed after curing to have a sufficient adhesiveness to a recording medium, as well as to have an excellent flexibility in the formed image portion, and an inkjet-recording method using the same can be provided.

## Claims

1. An ink composition for inkjet-recording, comprising (A) a compound having a polymerizable unsaturated bond and a cyclic amine structure in the molecule, (B) a compound having a polymerizable unsaturated bond and an alicyclic structure in the molecule, and (C) a radical polymerization initiator.

2. The ink composition for inkjet-recording of claim 1, further comprising (D) a colorant.

3. The ink composition for inkjet-recording of claim 2, wherein (A) the compound having a polymerizable unsaturated bond and a cyclic amine structure in the molecule is a compound having, in the molecule, a polymerizable unsaturated bond and a partial structure represented by the following Formula (1): 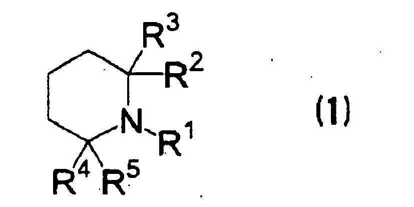 wherein, in Formula (1), R¹ represents an alkyl group or a substituted alkyl group, and R² to R⁵ each independently represents a methyl group or an ethyl group.

4. The ink composition for inkjet-recording of claim 1 or claim 2, wherein (A) the compound having a polymerizable unsaturated bond and a cyclic amine structure in the molecule is a compound represented by the following Formula (2), (3) or (4), or any combination thereof: 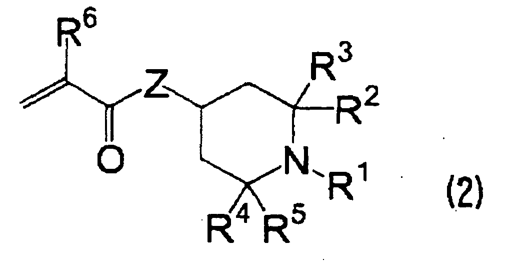 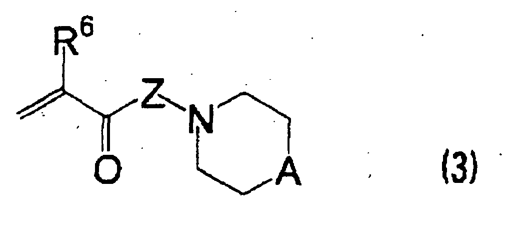 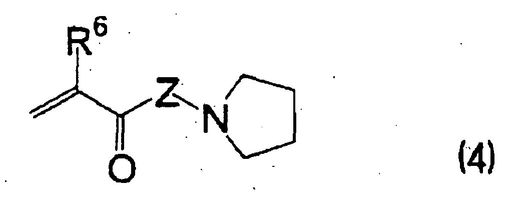 wherein, in Formula (2), (3) and (4), R¹ represents an alkyl group or a substituted alkyl group, R² to R⁵ each independently represents a methyl group or an ethyl group and R⁶ represents a methyl group or a hydrogen atom, Z represents a divalent connecting group or a single bond, and A represents a divalent organic group.

5. The ink composition for inkjet-recording of any one of claims 1 to 3, wherein (A) the compound having a polymerizable unsaturated bond and a cyclic amine structure in the molecule is a compound represented by the following Formula (2): 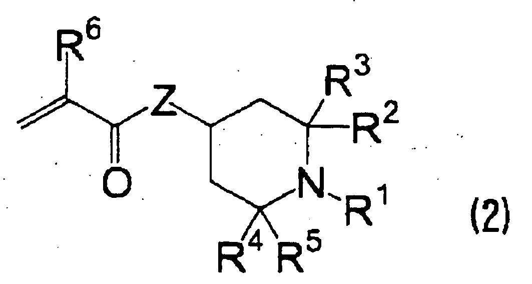 wherein, in Formula (2), R¹ represents an alkyl group or a substituted alkyl group, R² to R⁵ each independently represents a methyl group or an ethyl group and R⁶ represents a methyl group or a hydrogen atom, and Z represents a divalent connecting group or a single bond.

6. The ink composition for inkjet-recording to any preceding claim, wherein (B) the compound having a polymerizable unsaturated bond and an alicyclic structure in the molecule is a compound represented by the following Formula (5) below: 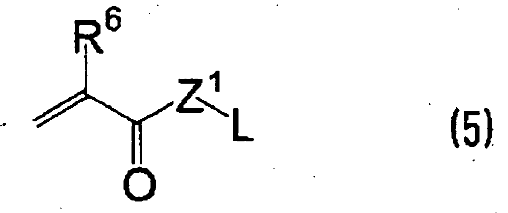 wherein, in Formula (5), R⁶ represents a methyl group or a hydrogen atom, Z¹ represents a divalent connecting group or a single bond, and L represents an alicyclic structure.

7. A method for inkjet-recording, comprising:
(i-1) ejecting the ink composition for inkjet-recording of any one of claims 1 to 6 onto a recording medium, and
(i-2) curing the ejected ink composition for inkjet-recording by irradiation with actinic radiation.

## Patentansprüche

1. Tintenzusammensetzung zum Tintenstrahlaufzeichnen, umfassend (A) eine Verbindung mit einer polymerisierbaren ungesättigten Bindung und einer cyclischen Aminstruktur in dem Molekül, (B) eine Verbindung mit einer polymerisierbaren ungesättigten Bindung und einer alicyclischen Struktur in dem Molekül und (C) einem radikalischen Polymerisationsinitiator.

2. Tintenzusammensetzung zum Tintenstrahlaufzeichnen nach Anspruch 1, ferner umfassend (D) einen Farbstoff.

3. Tintenzusammensetzung zum Tintenstrahlaufzeichnen nach Anspruch 2, worin (A) die Verbindung mit einer polymerisierbaren ungesättigten Bindung und einer cyclischen Aminstruktur in dem Molekül eine Verbindung mit, in dem Molekül, einer polymerisierbaren ungesättigten Bindung und einer Teilstruktur der folgenden Formel (1) ist: 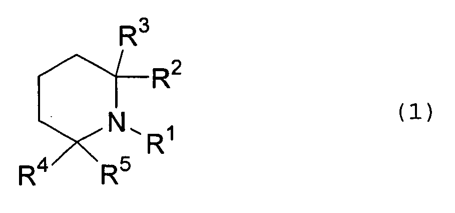 worin in Formel (1) R¹ eine Alkylgruppe oder eine substituierte Alkylgruppe darstellt und R² bis R⁵ jeweils unabhängig eine Methylgruppe oder ein Ethylgruppe darstellen.

4. Tintenzusammensetzung zum Tintenstrahlaufzeichnen nach Anspruch 1 oder Anspruch 2, worin (A) die Verbindung mit einer polymerisierbaren ungesättigten Bindung und einer cyclischen Aminstruktur in dem Molekül eine Verbindung der folgenden Formeln (2), (3) oder (4) oder einer beliebigen Kombination davon ist: 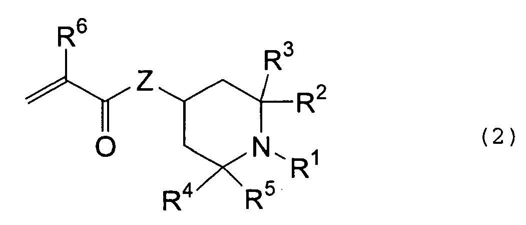 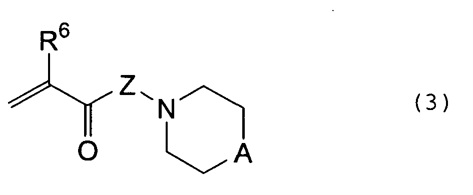 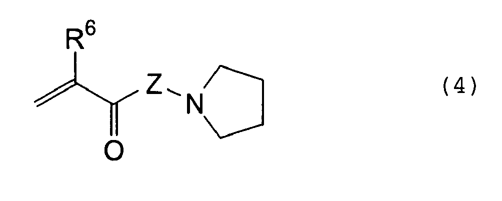 worin in Formeln (2), (3) und (4) R¹ eine Alkylgruppe oder eine substituierte Alkylgruppe darstellt, R² bis R⁵ jeweils unabhängig eine Methylgruppe oder eine Ethylgruppe darstellen und R⁶ eine Methylgruppe oder ein Wasserstoffatom darstellt, Z eine zweiwertige Verbindungsgruppe oder eine Einfachbindung darstellt und A eine zweiwertige organische Gruppe darstellt.

5. Tintenzusammensetzung zum Tintenstrahlaufzeichnen nach einem beliebigen der Ansprüche 1 bis 3, worin (A) die Verbindung mit einer polymerisierbaren ungesättigten Bindung und einer cyclischen Aminstruktur in dem Molekül eine Verbindung der folgenden Formel (2) ist: 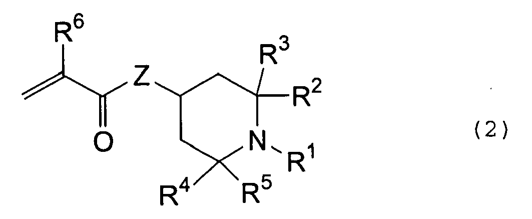 worin in Formel (2) R¹ eine Alkylgruppe oder eine substituierte Alkylgruppe darstellt, R² bis R⁵ jeweils unabhängig eine Methylgruppe oder eine Ethylgruppe darstellen und R⁶ eine Methylgruppe oder ein Wasserstoffatom darstellt, und Z eine zweiwertige Verbindungsgruppe oder eine Einfachbindung darstellt.

6. Tintenzusammensetzung zum Tintenstrahlaufzeichnen nach eine beliebigen vorhergehenden Anspruch, worin (B) die Verbindung mit einer polymerisierbaren ungesättigten Bindung und einer alicyclischen Struktur in dem Molekül eine Verbindung der folgenden Formel (5) ist: 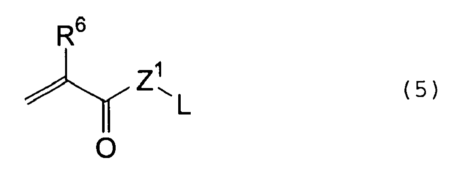 worin in Formel (5) R⁶ eine Methylgruppe oder ein Wasserstoffatom darstellt, Z¹ eine zweiwertige Verbindungsgruppe oder eine Einfachbindung darstellt und L eine alicyclische Struktur darstellt.

7. Verfahren zum Tintenstrahlaufzeichnen, umfassend:
(i-1) Ausstoßen der Tintenzusammensetzung zum Tintenstrahlaufzeichnen nach einem beliebigen der Ansprüche 1 bis 6 auf ein Aufzeichnungsmedium und
(i-2) Härten der ausgestoßenen Tintenzusammensetzung zum Tintenstrahlaufzeichnen durch Bestrahlung mit aktinischer Bestrahlung.

## Revendications

1. Composition d'encre pour enregistrement à jet d'encre, comprenant (A) un composé ayant une liaison insaturée polymérisable et une structure amine cyclique dans la molécule, B) un composé ayant une liaison insaturée polymérisable et une structure alicyclique dans la molécule, et (C) un initiateur de polymérisation radicalaire.

2. Composition d'encre pour enregistrement à jet d'encre selon la revendication 1, comprenant en outre (D) un colorant.

3. Composition d'encre pour enregistrement à jet d'encre selon la revendication 2, dans laquelle (A) le composé ayant une liaison insaturée polymérisable et une structure amine cyclique dans la molécule est un composé ayant, dans la molécule, une liaison insaturée polymérisable et une structure partielle représentée par la Formule (1) suivante : 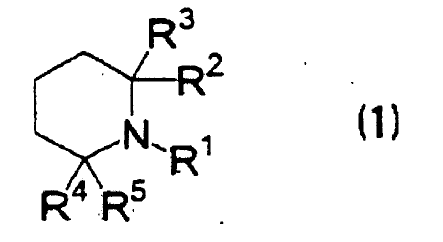 dans laquelle, dans la Formule (1), R¹ représente un groupe alkyle ou un groupe alkyle substitué, et R² à R⁵ représentent chacun indépendamment un groupe méthyle ou un groupe éthyle.

4. Composition d'encre pour enregistrement à jet d'encre selon la revendication 1 ou la revendication 2, dans laquelle (A) le composé ayant une liaison insaturée polymérisable et une structure amine cyclique dans la molécule est un composé représenté par les Formules (2), (3) ou (4) suivantes, ou une quelconque combinaison de celles-ci : 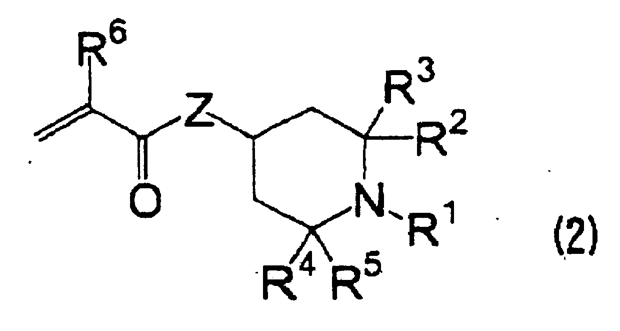 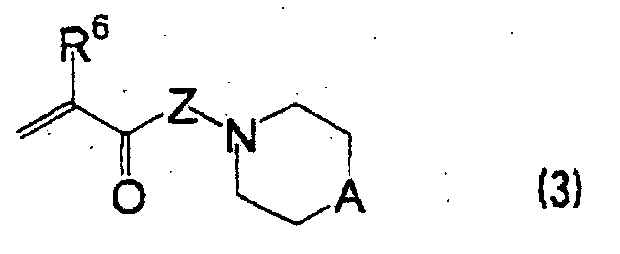 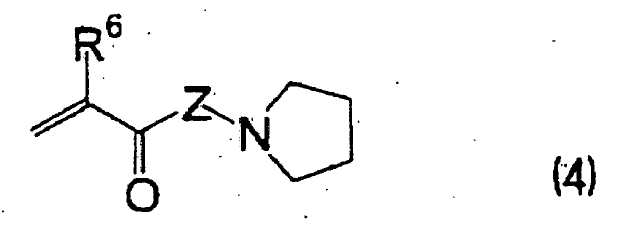 dans laquelle, dans les Formules (2), (3) et (4), R¹ représente un groupe alkyle ou un groupe alkyle substitué, R² à R⁵ représentent chacun indépendamment un groupe méthyle ou un groupe éthyle et R⁶ représente un groupe méthyle ou un atome d'hydrogène, Z représente un groupe de liaison divalent ou une liaison simple, et A représente un groupe organique divalent.

5. Composition d'encre pour enregistrement à jet d'encre selon l'une quelconque des revendications 1 à 3, dans laquelle (A) le composé ayant une liaison insaturée polymérisable et une structure amine cyclique dans la molécule est un composé représenté par la Formule (2) suivante : 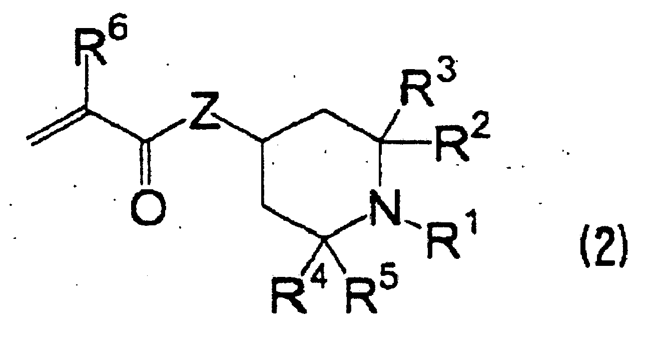 dans laquelle, dans la Formule (2), R¹ représente un groupe alkyle ou un groupe alkyle substitué, R² à R⁵ représentent chacun indépendamment un groupe méthyle ou un groupe éthyle et R⁶ représente un groupe méthyle ou un atome d'hydrogène, et Z représente un groupe de liaison divalent ou une liaison simple.

6. Composition d'encre pour enregistrement à jet d'encre selon une quelconque revendication précédente, dans laquelle (B) le composé ayant une liaison insaturée polymérisable et une structure alicyclique dans la molécule est un composé représenté par la Formule (5) suivante ci-dessous : 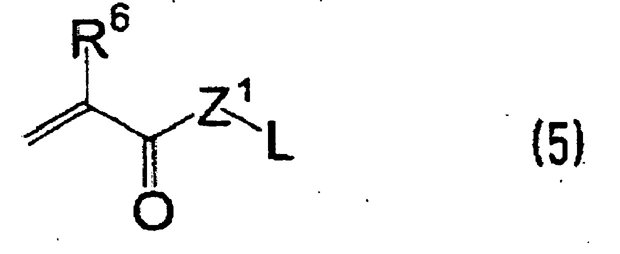 dans laquelle, dans la Formule (5), R⁶ représente un groupe méthyle ou un atome d'hydrogène, Z¹ représente un groupe de liaison divalent ou une liaison simple, et L représente une structure alicyclique.

7. Procédé d'enregistrement à jet d'encre, comprenant :
(i-1) l'éjection de la composition d'encre pour enregistrement à jet d'encre selon l'une quelconque des revendications 1 à 6 sur un support d'enregistrement, et
(i-2) le durcissement de la composition d'encre éjectée pour enregistrement à jet d'encre , par irradiation avec un rayonnement actinique.
